(19) **Europäisches Patentamt / European Patent Office / Office européen des brevets**

(11) **EP 4 561 203 A1**

(12) **EUROPEAN PATENT APPLICATION**
published in accordance with Art. 153(4) EPC

(43) Date of publication:
28.05.2025 Bulletin 2025/22

(21) Application number: 23843309.8

(22) Date of filing: 18.07.2023

(51) International Patent Classification (IPC):
H04W 64/00 (2009.01)    H04W 4/029 (2018.01)
H04W 24/08 (2009.01)    H04L 5/00 (2006.01)
G06T 17/05 (2011.01)

(52) Cooperative Patent Classification (CPC):
G06T 17/05; H04L 5/00; H04W 4/029; H04W 24/08;
H04W 64/00

(86) International application number:
PCT/KR2023/010234

(87) International publication number:
WO 2024/019463 (25.01.2024 Gazette 2024/04)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 19.07.2022 US 202263390299 P

(71) Applicant: LG Electronics Inc.
Yeongdeungpo-gu
Seoul 07336 (KR)

(72) Inventors:
• HUH, Joongkwan
  Seoul 06772 (KR)
• HWANG, Jinyup
  Seoul 06772 (KR)
• YANG, Yoonoh
  Seoul 06772 (KR)
• LEE, Sangwook
  Seoul 06772 (KR)
• PARK, Jinwoong
  Seoul 06772 (KR)

(74) Representative: Maikowski & Ninnemann
Patentanwälte Partnerschaft mbB
Postfach 15 09 20
10671 Berlin (DE)

(54) **UE POSITIONING**

(57) One disclosure of the present specification provides a method by which an LMF performs communication. The method may comprise the steps of: receiving, from a UE, a message requesting position information about the UE; transmitting, to one or more base stations, a request message requesting a measurement related to the position of the UE; receiving, from the one or more base stations, measurement information related to the UE; acquiring, on the basis of the measurement information, information related to an indoor structure of a place in which the UE is positioned; determining position information about the UE on the basis of the information related to the indoor structure and the measurement information; and transmitting the position information about the UE to the UE.

FIG. 27

**Description**

**TECHNICAL FIELD**

The present disclosure relates to a radio communication.

**BACKGROUND ART**

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

Positioning based on 3GPP-based communications is being discussed. However, the accuracy of positioning in non-line-of-sight (NLOS) environments has not been guaranteed in the past.

**DISCLOSURE**

**TECHNICAL SOLUTION**

In one aspect, it provides a method for an LMF to perform communication. The method may include: receiving a message requesting location information of the UE from a UE; sending a request message to one or more base stations requesting measruement relatd to the location of the UE; receiving measurement information associated with the UE from the one or more base stations; obtaining information related to an indoor structure of a place where the UE is located, based on the measurement information; determining location information of said UE, based on the information related to the indoor structure and the measurement information; and transmitting the location information of the UE to the UE.

In another aspect, an apparatus implementing the above method is provided.

In one aspect, it provides a method for a UE to perform communication. The method may include: sending a message requesting location information of the UE to an LMF; performing a measurement of one or more base stations; sending a measurement report to the one or more base stations based on the measurement; and receiving location information of the UE from the LMF.

In another aspect, an apparatus implementing the above method is provided.

**BRIEF DESCRIPTION OF THE DRAWINGS**

FIG. 1 shows an example of a communication system to which implementations of the present disclosure is applied.
FIG. 2 shows an example of wireless devices to which implementations of the present disclosure is applied.
FIG. 3 shows an example of a wireless device to which implementations of the present disclosure is applied.
FIG. 4 is a diagram showing an example of a communication structure that can be provided in a 6G system.
FIG. 5 shows an example of an electromagnetic spectrum.
FIGS. 6a to 6c are signal flowcharts illustrating an exemplary UE triggered service request procedure.
FIG. 7 is a signal flowchart illustrating an exemplary network initiated service request procedure.
FIG. 8 is a first example of positioning based on DL-TDOA.
FIG. 9 is a second example of positioning based on DL-TDOA.
FIG. 10 is an example of positioning based on Multi-cell RTT.
FIG. 11 is an example of positioning based on UL-AOA.
FIG. 12 is an example of a positioning method for an outdoor environment according to the prior art.

FIG. 13 illustrates an example of measuring a time difference according to one embodiment of the present disclosure.

FIG. 14 illustrates an example of calculating an RTT, according to one embodiment of the present disclosure.

FIG. 15 illustrates an example of multi-cell RTT positioning according to one embodiment of the present disclosure.

FIG. 16 illustrates an example of measuring DL-RSTD according to one embodiment of the present disclosure.

FIG. 17 illustrates an example of performing DL-TDOA positioning, according to one embodiment of the present disclosure.

FIG. 18 illustrates an example of positioning based on DL-AoD and/or UL-AoA, according to one embodiment of the present disclosure.

FIG. 19 is an example of a UE-assisted and UE-based positioning procedure, according to one embodiment of the present disclosure.

FIG. 20 is an example of a network-assisted positioning procedure according to one embodiment of the present disclosure.

FIG. 21 illustrates an example of positioning error in an indoor environment.

FIGS. 22a to 22c illustrate an example of performing mmWave sensing, according to one embodiment of the present disclosure.

FIG. 23 illustrates an example of utilizing a 3D map, according to one embodiment of the present disclosure.

FIG. 24 illustrates an example of predicting a location of a UE in an indoor environment, according to one embodiment of the present disclosure.

FIG. 25 illustrates an example of displaying the location of a UE on a display, according to one embodiment of the present disclosure.

FIG. 26 illustrates an example of ray-tracing, according to one embodiment of the present disclosure.

FIG. 27 illustrates an example of a procedure, according to one embodiment of the present disclosure.

## MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regard to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein may be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

Although a user equipment (UE) is illustrated by way of example in the accompanying drawings, the illustrated UE may be referred to as a terminal, mobile equipment (ME), and the like. In addition, the UE may be a portable device such as a notebook computer, a mobile phone, a PDA, a smartphone, and a multimedia device or may be a non-portable device such as a PC or a vehicle-mounted device.

Hereinafter, a UE is used as an example of a wireless communication device (or a wireless device or wireless equipment) capable of wireless communication. An operation performed by a UE may be performed by a wireless communication device. A wireless communication device may also be referred to as a wireless device, wireless equipment, or the like. Hereinafter, AMF may mean an AMF node, SMF may mean an SMF node, and UPF may mean a UPF node.

A base station used below generally refers to a fixed station communicating with a wireless device and may also be referred as an evolved-NodeB (eNodeB), an evolved-NodeB (eNB), a base transceiver system (BTS), an access point, and a next generation NodeB (gNB).

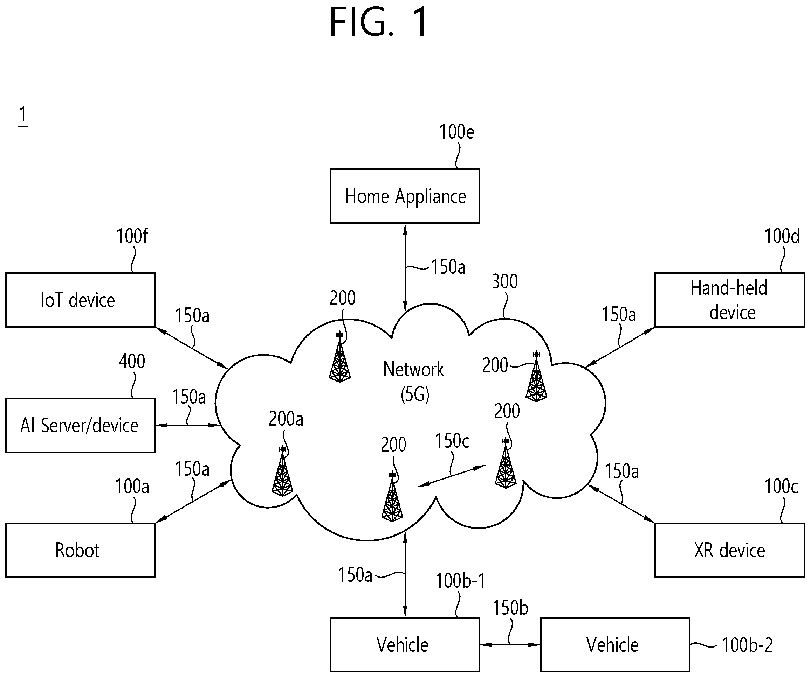

FIG. 1 shows an example of a communication system to which implementations of the present disclosure is applied.

The 5G usage scenarios shown in FIG. 1 are only exemplary, and the technical features of the present disclosure may be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Partial use cases may require a plurality of categories for optimization and other use cases may focus only upon one key performance indicator (KPI). 5G supports such various use cases using a flexible and reliable method.

eMBB far surpasses basic mobile Internet access and covers abundant bidirectional work and media and entertainment applications in cloud and augmented reality. Data is one of 5G core motive forces and, in a 5G era, a dedicated voice service may not be provided for the first time. In 5G, it is expected that voice will be simply processed as an application program using data connection provided by a communication system. Main causes for increased traffic volume are due to an increase in the size of content and an increase in the number of applications requiring high data transmission rate. A streaming service (of audio and video), conversational video, and mobile Internet access will be more widely used as more devices are connected to the Internet. These many application programs require connectivity of an always turned-on state in order to push real-time information and alarm for users. Cloud storage and applications are rapidly increasing in a mobile communication platform and may be applied to both work and entertainment. The cloud storage is a special use case which accelerates growth of uplink data transmission rate. 5G is also used for remote work of cloud. When a tactile interface is used, 5G demands much lower end-to-end latency to maintain user good experience. Entertainment, for example, cloud gaming and video streaming, is another core element which increases demand for mobile broadband capability. Entertainment is essential for a smartphone and a tablet in any place including high mobility environments such as a train, a vehicle, and an airplane. Other use cases are augmented reality for entertainment and information search. In this case, the augmented reality requires very low latency and instantaneous data volume.

In addition, one of the most expected 5G use cases relates a function capable of smoothly connecting embedded sensors in all fields, i.e., mMTC. It is expected that the number of potential Internet-of-things (IoT) devices will reach 204 hundred million up to the year of 2020. An industrial IoT is one of categories of performing a main role enabling a smart city, asset tracking, smart utility, agriculture, and security infrastructure through 5G.

URLLC includes a new service that will change industry through remote control of main infrastructure and an ultra-reliable/available low-latency link such as a self-driving vehicle. A level of reliability and latency is essential to control a smart grid, automatize industry, achieve robotics, and control and adjust a drone.

5G is a means of providing streaming evaluated as a few hundred megabits per second to gigabits per second and may complement fiber-to-the-home (FTTH) and cable-based broadband (or DOCSIS). Such fast speed is needed to deliver TV in resolution of 4K or more (6K, 8K, and more), as well as virtual reality and augmented reality. Virtual reality (VR) and augmented reality (AR) applications include almost immersive sports games. A specific application program may require a special network configuration. For example, for VR games, gaming companies need to incorporate a core server into an edge network server of a network operator in order to minimize latency.

Automotive is expected to be a new important motivated force in 5G together with many use cases for mobile communication for vehicles. For example, entertainment for passengers requires high simultaneous capacity and mobile broadband with high mobility. This is because future users continue to expect connection of high quality regardless of their locations and speeds. Another use case of an automotive field is an AR dashboard. The AR dashboard causes a driver to identify an object in the dark in addition to an object seen from a front window and displays a distance from the object and a movement of the object by overlapping information talking to the driver. In the future, a wireless module enables communication between vehicles, information exchange between a vehicle and supporting infrastructure, and information exchange between a vehicle and other connected devices (e.g., devices accompanied by a pedestrian). A safety system guides alternative courses of a behavior so that a driver may drive more safely drive, thereby lowering the danger of an accident. The next stage will be a remotely controlled or self-driven vehicle. This requires very high reliability and very fast communication between different self-driven vehicles and between a vehicle and infrastructure. In the future, a self-driven vehicle will perform all driving activities and a driver will focus only upon abnormal traffic that the vehicle cannot identify. Technical requirements of a self-driven vehicle demand ultra-low latency and ultra-high reliability so that traffic safety is increased to a level that cannot be achieved by human being.

A smart city and a smart home/building mentioned as a smart society will be embedded in a high-density wireless sensor network. A distributed network of an intelligent sensor will identify conditions for costs and energy-efficient maintenance of a city or a home. Similar configurations may be performed for respective households. All of temperature sensors, window and heating controllers, burglar alarms, and home appliances are wirelessly connected. Many of these sensors are typically low in data transmission rate, power, and cost. However, real-time HD video may be demanded by a specific type of device to perform monitoring.

Consumption and distribution of energy including heat or gas is distributed at a higher level so that automated control of the distribution sensor network is demanded. The smart grid collects information and connects the sensors to each other using digital information and communication technology so as to act according to the collected information. Since this information may include behaviors of a supply company and a consumer, the smart grid may improve distribution of fuels such as electricity by a method having efficiency, reliability, economic feasibility, production sustainability, and automation. The smart grid may also be regarded as another sensor network having low latency.

Mission critical application (e.g., e-health) is one of 5G use scenarios. A health part contains many application programs capable of enjoying benefit of mobile communication. A communication system may support remote treatment that provides clinical treatment in a faraway place. Remote treatment may aid in reducing a barrier against distance and improve access to medical services that cannot be continuously available in a faraway rural area. Remote treatment is also used to perform important treatment and save lives in an emergency situation. The wireless sensor network based on mobile communication may provide remote monitoring and sensors for parameters such as heart rate and blood pressure.

Wireless and mobile communication gradually becomes important in the field of an industrial application. Wiring is high in installation and maintenance cost. Therefore, a possibility of replacing a cable with re-constructible wireless links is an attractive opportunity in many industrial fields. However, in order to achieve this replacement, it is necessary for wireless connection to be established with latency, reliability, and capacity similar to those of the cable and management of wireless connection needs to be simplified. Low latency and a very low error probability are new requirements when connection to 5G is needed.

Logistics and freight tracking are important use cases for mobile communication that enables inventory and package tracking anywhere using a location-based information system. The use cases of logistics and freight typically demand low data rate but require location information with a wide range and reliability.

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and may be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that may create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions may be called intelligent robots. Robots may be classified as industrial, medical, home, military, etc., depending on the purpose or area of use. The robot may perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles may be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area may be supported in traditional cellular bands, and if SCS is 30 kHz/60 kHz, dense-urban, lower latency, and wider carrier bandwidth may be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW). FR2 may include FR 2-1 and FR 2-2, as shown in the examples in Table 1 and Table 2.

[Table 1]

| Frequency Range designation | | Corresponding frequency range | Subcarrier Spacing |
|---|---|---|---|
| FR1 | | 450MHz - 6000MHz | 15, 30, 60kHz |
| FR2 | FR2-1 | 24250MHz - 52600MHz | 60, 120, 240kHz |
| | FR2-2 | 57000MHz - 71000MHz | 120, 480, 960kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

[Table 2]

| Frequency Range designation | | Corresponding frequency range | Subcarrier Spacing |
|---|---|---|---|
| FR1 | | 410MHz - 7125MHz | 15, 30, 60kHz |
| FR2 | FR2-1 | 24250MHz - 52600MHz | 60, 120, 240kHz |
| | FR2-2 | 57000MHz - 71000MHz | 120, 480, 960kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally, and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally, and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

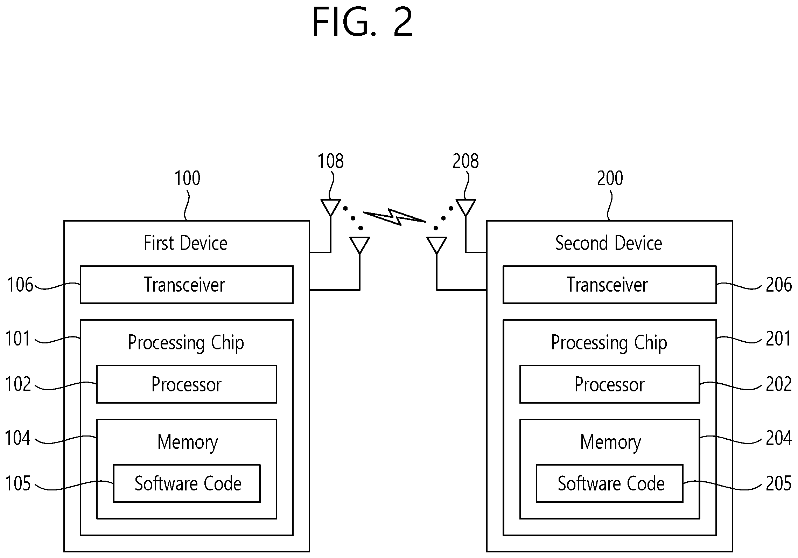

**FIG. 2 shows an example of wireless devices to which implementations of the present disclosure is applied.**

Referring to FIG. 2, a first wireless device 100 and a second wireless device 200 may transmit/receive radio signals to/from an external device through a variety of RATs (e.g., LTE and NR).

In FIG. 2, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. It is exemplarily shown in FIG. 2 that the memory 104 is included in the processing chip 101. Additional and/or alternatively, the memory 104 may be placed outside of the processing chip 101.

The processor 102 may control the memory 104 and/or the transceiver 106 and may be configured to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a software code 105 which implements instructions that, when executed by the processor 102, perform the descriptions, functions, procedures, suggestions, methods and/or operational flowcharts disclosed in the present disclosure. For example, the software code 105 may implement instructions that, when executed by the processor 102, perform the descriptions, functions, procedures, suggestions, methods and/or operational flowcharts disclosed in the present disclosure. For example, the software code 105 may control the processor 102 to perform one or more protocols. For example, the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with radio frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. It is exemplarily shown in FIG. 2 that the memory 204 is included in the processing chip 201.

Additional and/or alternatively, the memory 204 may be placed outside of the processing chip 201.

The processor 202 may control the memory 204 and/or the transceiver 206 and may be configured to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a software code 205 which implements instructions that, when executed by the processor 202, perform the descriptions, functions, procedures, suggestions, methods and/or operational flowcharts disclosed in the present disclosure. For example, the software code 205 may implement instructions that, when executed by the processor 202, perform the descriptions, functions, procedures, suggestions, methods and/or operational flowcharts disclosed in the present disclosure. For example, the software code 205 may control the processor 202 to perform one or more protocols. For example, the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as physical (PHY) layer, media access control (MAC) layer, radio link control (RLC) layer, packet data convergence protocol (PDCP) layer, radio resource control (RRC) layer, and service data adaptation protocol (SDAP) layer). The one or more processors 102 and 202 may generate one or more protocol data units (PDUs) and/or one or more service data unit (SDUs) according to the descriptions, functions, procedures, suggestions, methods and/or operational flowcharts disclosed in the present disclosure. The one or more processors 102 and 202 may generate messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, suggestions, methods and/or operational flowcharts disclosed in the present disclosure may be implemented using firmware or software and the firmware or software may be configured to include the modules, procedures, or functions. Firmware or software configured to perform the descriptions, functions, procedures, suggestions, methods and/or operational flowcharts disclosed in the present disclosure may be included in the one or more processors 102 and 202 or stored in the one or more memories 104 and 204 so as to be driven by the one or more processors 102 and 202. The descriptions, functions, procedures, suggestions, methods and/or operational flowcharts disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and downconvert the OFDM signals into OFDM baseband signals by their (analog) oscillators and/or filters under the control of the one or more processors 102 and 202.

In the implementations of the present disclosure, a UE may operate as a transmitting device in uplink (UL) and as a receiving device in downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be configured to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be configured to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

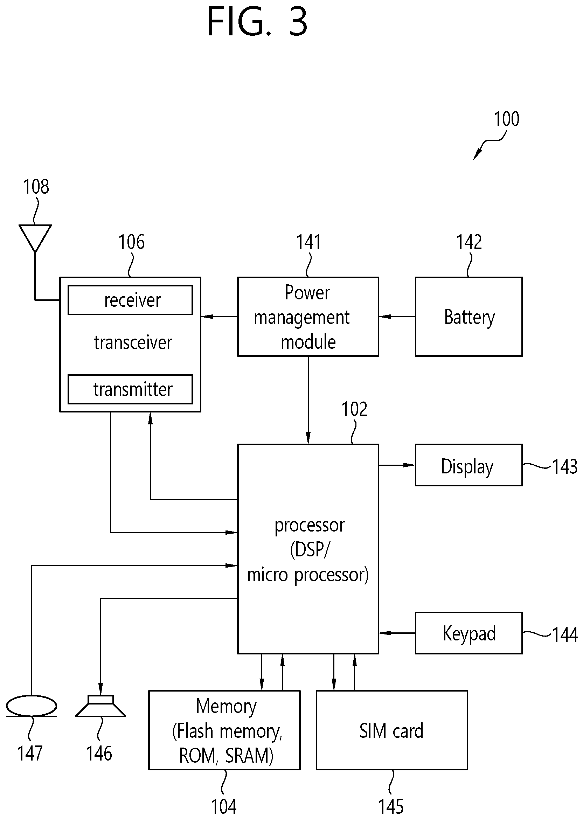

FIG. 3 shows an example of a wireless device to which implementations of the present disclosure is applied.

The wireless device may be implemented in various forms according to a use-case/service (refer to FIG. 1).

Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 of FIG. 2 and/or the one or more memories 104 and 204 of FIG. 2. For example, the transceiver(s) 114 may include the one or more transceivers 106 and 206 of FIG. 2 and/or the one or more antennas 108 and 208 of FIG. 2. The control unit 120 is electrically connected to the communication unit 110, the memory unit 130, and the additional components 140 and controls overall operation of each of the wireless devices 100 and 200. For example, the control unit 120 may control an electric/mechanical operation of each of the wireless devices 100 and 200 based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of the wireless devices 100 and 200. For example, the additional components 140 may include at least one of a power unit/battery, input/output (I/O) unit (e.g., audio I/O port, video I/O port), a driving unit, and a computing unit. The wireless devices 100 and 200 may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a FinTech device (or a finance device), a security device, a climate/environment device, the AI server/device (400 of FIG. 1), the BSs (200 of FIG. 1), a network node, etc. The wireless devices 100 and 200 may be used in a mobile or fixed place according to a use-example/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor (AP), an electronic control unit (ECU), a graphical processing unit, and a memory control processor. As another example, the memory unit 130 may be configured by a RAM, a DRAM, a ROM, a flash memory, a volatile memory, a non-volatile memory, and/or a combination thereof.

<Operating bands of NR>.

The operating bands in NR are as follows

The operating bands in Table 3 below are the refarmed operating bands from the operating bands of LTE/LTE-A. This is referred to as the FR1 band.

[Table 3]

| NR operating bands | Uplink (UL) operating band | Downlink(DL) operating band | Duplex Mode |
|---|---|---|---|
| | $F_{UL\_low}$ - $F_{UL\_high}$ | $F_{DL\_low}$ - $F_{DL\_high}$ | |
| n1 | 1920 MHz - 1980 MHz | 2110 MHz - 2170 MHz | FDD |
| n2 | 1850 MHz - 1910 MHz | 1930 MHz - 1990 MHz | FDD |
| n3 | 1710 MHz - 1785 MHz | 1805 MHz - 1880 MHz | FDD |
| n5 | 824 MHz - 849 MHz | 869 MHz - 894 MHz | FDD |
| n7 | 2500 MHz - 2570 MHz | 2620 MHz - 2690 MHz | FDD |
| n8 | 880 MHz - 915 MHz | 925 MHz - 960 MHz | FDD |
| n12 | 699 MHz - 716 MHz | 729 MHz - 746 MHz | FDD |
| n20 | 832 MHz - 862 MHz | 791 MHz - 821 MHz | FDD |
| n25 | 1850 MHz - 1915 MHz | 1930 MHz - 1995 MHz | FDD |
| n28 | 703 MHz - 748 MHz | 758 MHz - 803 MHz | FDD |
| n34 | 2010 MHz - 2025 MHz | 2010 MHz - 2025 MHz | TDD |
| n38 | 2570 MHz - 2620 MHz | 2570 MHz - 2620 MHz | TDD |
| n39 | 1880 MHz - 1920 MHz | 1880 MHz - 1920 MHz | TDD |
| n40 | 2300 MHz - 2400 MHz | 2300 MHz - 2400 MHz | TDD |
| n41 | 2496 MHz - 2690 MHz | 2496 MHz - 2690 MHz | TDD |
| n50 | 1432 MHz - 1517 MHz | 1432 MHz - 1517 MHz | TDD1 |
| n51 | 1427 MHz - 1432 MHz | 1427 MHz - 1432 MHz | TDD |
| n66 | 1710 MHz - 1780 MHz | 2110 MHz - 2200 MHz | FDD |
| n70 | 1695 MHz - 1710 MHz | 1995 MHz - 2020 MHz | FDD |
| n71 | 663 MHz - 698 MHz | 617 MHz - 652 MHz | FDD |
| n74 | 1427 MHz - 1470 MHz | 1475 MHz - 1518 MHz | FDD |
| n75 | N/A | 1432 MHz - 1517 MHz | SDL |
| n76 | N/A | 1427 MHz - 1432 MHz | SDL |
| n77 | 3300 MHz - 4200 MHz | 3300 MHz - 4200 MHz | TDD |

(continued)

| NR operating bands | Uplink (UL) operating band | Downlink(DL) operating band | Duplex Mode |
|---|---|---|---|
| | $F_{UL\_low}$ - $F_{UL\_high}$ | $F_{DL\_low}$ - $F_{DL\_high}$ | |
| n78 | 3300 MHz - 3800 MHz | 3300 MHz - 3800 MHz | TDD |
| n79 | 4400 MHz - 5000 MHz | 4400 MHz - 5000 MHz | TDD |
| n80 | 1710 MHz - 1785 MHz | N/A | SUL |
| n81 | 880 MHz - 915 MHz | N/A | SUL |
| n82 | 832 MHz - 862 MHz | N/A | SUL |
| n83 | 703 MHz - 748 MHz | N/A | SUL |
| n84 | 1920 MHz - 1980 MHz | N/A | SUL |
| n86 | 1710 MHz - 1780 MHz | N/A | SUL |

The table below shows the NR operating band defined at high frequencies. This is called the FR2 band.

[Table 4]

| NR Operating band | Uplink (UL) operating band | Downlink(DL) operating band | Duplex Mode |
|---|---|---|---|
| | $F_{UL\_low}$ - $F_{UL\_high}$ | $F_{DL\_low}$ - $F_{DL\_high}$ | |
| n257 | 26500 MHz - 29500 MHz | 26500 MHz - 29500 MHz | TDD |
| n258 | 24250 MHz - 27500 MHz | 24250 MHz - 27500 MHz | TDD |
| n259 | 37000 MHz - 40000 MHz | 37000 MHz - 40000 MHz | TDD |
| n260 | 37000 MHz - 40000 MHz | 37000 MHz - 40000 MHz | FDD |
| n261 | 27500 MHz - 28350 MHz | 27500 MHz - 28350 MHz | FDD |

<6G System General>

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, and (vii) connected intelligence with machine learning capacity. The vision of the 6G system may include four aspects such as "intelligent connectivity", "deep connectivity", "holographic connectivity" and "ubiquitous connectivity", and the 6G system may satisfy the requirements shown in Table 4 below. That is, Table 4 shows the requirements of the 6G system.

[Table 5]

| Per device peak data rate | 1 Tbps |
|---|---|
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

The 6G system may have key factors such as enhanced mobile broadband (eMBB), ultra-reliable low latency communications (URLLC), massive machine type communications (mMTC), AI integrated communication, tactile Internet, high throughput, high network capacity, high energy efficiency, low backhaul and access network congestion and enhanced data security.

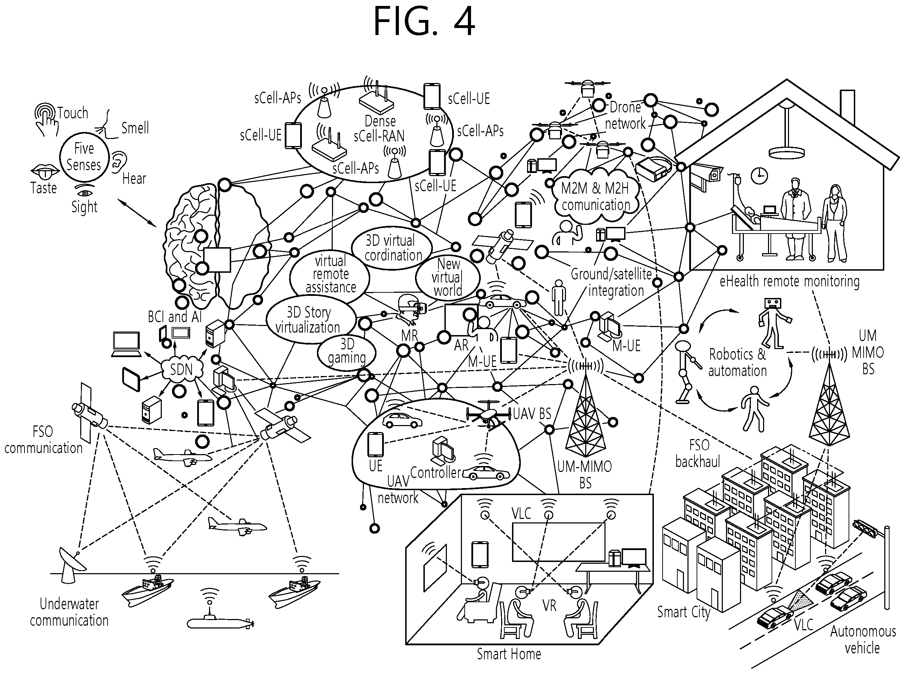

FIG. 4 is a diagram showing an example of a communication structure that can be provided in a 6G system.

The 6G system will have 50 times higher simultaneous wireless communication connectivity than a 5G wireless communication system. URLLC, which is the key feature of 5G, will become more important technology by providing end-to-end latency less than 1 ms in 6G communication. At this time, the 6G system may have much better volumetric spectrum efficiency unlike frequently used domain spectrum efficiency. The 6G system may provide advanced battery technology for energy harvesting and very long battery life and thus mobile devices may not need to be separately charged in the 6G system. In addition, in 6G, new network characteristics may be as follows.

- Satellites integrated network: To provide a global mobile group, 6G will be integrated with satellite. Integrating terrestrial waves, satellites and public networks as one wireless communication system may be very important for 6G.
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer: A 6G wireless network may transfer power in order to charge the batteries of devices such as smartphones and sensors. Therefore, wireless information and energy transfer (WIET) will be integrated.
- Ubiquitous super 3-dimemtion connectivity: Access to networks and core network functions of drones and very low earth orbit satellites will establish super 3D connection in 6G ubiquitous.

In the new network characteristics of 6G, several general requirements may be as follows.

- Small cell networks: The idea of a small cell network was introduced in order to improve received signal quality as a result of throughput, energy efficiency and spectrum efficiency improvement in a cellular system. As a result, the small cell network is an essential feature for 5G and beyond 5G (5GB) communication systems. Accordingly, the 6G communication system also employs the characteristics of the small cell network.
- Ultra-dense heterogeneous network: Ultra-dense heterogeneous networks will be another important characteristic of the 6G communication system. A multi-tier network composed of heterogeneous networks improves overall QoS and reduces costs.
- High-capacity backhaul: Backhaul connection is characterized by a high-capacity backhaul network in order to support high-capacity traffic. A high-speed optical fiber and free space optical (FSO) system may be a possible solution for this problem.
- Radar technology integrated with mobile technology: High-precision localization (or location-based service) through communication is one of the functions of the 6G wireless communication system. Accordingly, the radar system will be integrated with the 6G network.
- Softwarization and virtualization: Softwarization and virtualization are two important functions which are the bases of a design process in a 5GB network in order to ensure flexibility, reconfigurability and programmability.

**<Core implementation technology of 6G system>**

Artificial Intelligence

Technology which is most important in the 6G system and will be newly introduced is AI. AI was not involved in the 4G system. A 5G system will support partial or very limited AI. However, the 6G system will support AI for full automation. Advance in machine learning will create a more intelligent network for real-time communication in 6G. When AI is introduced to communication, real-time data transmission may be simplified and improved. AI may determine a method of performing complicated target tasks using countless analysis. That is, AI may increase efficiency and reduce processing delay.

Time-consuming tasks such as handover, network selection or resource scheduling may be immediately performed by using AI. AI may play an important role even in M2M, machine-to-human and human-to-machine communication. In addition, AI may be rapid communication in a brain computer interface (BCI). An AI based communication system may be supported by meta materials, intelligent structures, intelligent networks, intelligent devices, intelligent recognition radios, self-maintaining wireless networks and machine learning.

Recently, attempts have been made to integrate AI with a wireless communication system in the application layer or the network layer, but deep learning have been focused on the wireless resource management and allocation field. However, such studies are gradually developed to the MAC layer and the physical layer, and, particularly, attempts to combine deep learning in the physical layer with wireless transmission are emerging. AI-based physical layer transmission means applying a signal processing and communication mechanism based on an AI driver rather than a traditional communication framework in a fundamental signal processing and communication mechanism. For example, channel coding and decoding based on deep learning, signal estimation and detection based on deep learning, multiple input multiple output (MIMO) mechanisms based on deep learning, resource scheduling and allocation based on AI, etc. may be included.

Machine learning may be used for channel estimation and channel tracking and may be used for power allocation, interference cancellation, etc. in the physical layer of DL. In addition, machine learning may be used for antenna selection, power control, symbol detection, etc. in the MIMO system.

Machine learning refers to a series of operations to train a machine in order to create a machine which can perform tasks which cannot be performed or are difficult to be performed by people. Machine learning requires data and learning models. In machine learning, data learning methods may be roughly divided into three methods, that is, supervised learning, unsupervised learning and reinforcement learning.

Neural network learning is to minimize output error. Neural network learning refers to a process of repeatedly inputting training data to a neural network, calculating the error of the output and target of the neural network for the training data, backpropagating the error of the neural network from the output layer of the neural network to an input layer in order to reduce the error and updating the weight of each node of the neural network.

Supervised learning may use training data labeled with a correct answer and the unsupervised learning may use training data which is not labeled with a correct answer. That is, for example, in case of supervised learning for data classification, training data may be labeled with a category. The labeled training data may be input to the neural network, and the output (category) of the neural network may be compared with the label of the training data, thereby calculating the error. The calculated error is backpropagated from the neural network backward (that is, from the output layer to the input layer), and the connection weight of each node of each layer of the neural network may be updated according to backpropagation. Change in updated connection weight of each node may be determined according to the learning rate. Calculation of the neural network for input data and backpropagation of the error may configure a learning cycle (epoch). The learning data is differently applicable according to the number of repetitions of the learning cycle of the neural network. For example, in the early phase of learning of the neural network, a high learning rate may be used to increase efficiency such that the neural network rapidly ensures a certain level of performance and, in the late phase of learning, a low learning rate may be used to increase accuracy.

The learning method may vary according to the feature of data. For example, for the purpose of accurately predicting data transmitted from a transmitter in a receiver in a communication system, learning may be performed using supervised learning rather than unsupervised learning or reinforcement learning.

The learning model corresponds to the human brain and may be regarded as the most basic linear model. However, a paradigm of machine learning using a neural network structure having high complexity, such as artificial neural networks, as a learning model is referred to as deep learning.

Neural network cores used as a learning method may roughly include a deep neural network (DNN) method, a convolutional deep neural network (CNN) method, a recurrent Boltzmman machine (RNN) method and a spiking neural network (SNN). Such a learning model is applicable.

THz (Terahertz) Communication

A data rate may increase by increasing bandwidth. This may be performed by using sub-TH communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF.

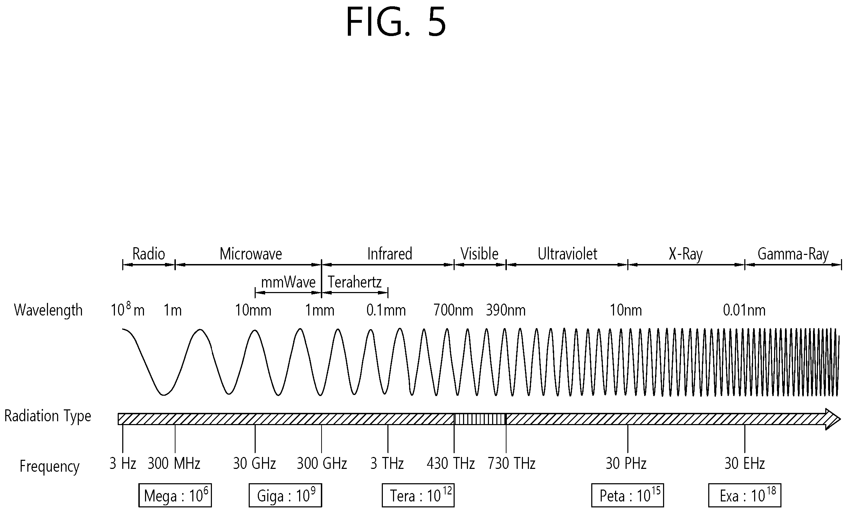

FIG. 5 shows an example of an electromagnetic spectrum.

The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.

Large-scale MIMO

One of core technologies for improving spectrum efficiency is MIMO technology. When MIMO technology is improved, spectrum efficiency is also improved. Accordingly, massive MIMO technology will be important in the 6G system. Since MIMO technology uses multiple paths, multiplexing technology and beam generation and management technology suitable for the THz band should be significantly considered such that data signals are transmitted through one or more paths.

Hologram Beamforming

Beamforming is a signal processing procedure that adjusts an antenna array to transmit radio signals in a specific direction. This is a subset of smart antennas or advanced antenna systems. Beamforming technology has several advantages, such as high signal-to-noise ratio, interference prevention and rejection, and high network efficiency. Hologram Beamforming (HBF) is a new beamforming method that differs significantly from MIMO systems because this uses a software-defined antenna. HBF will be a very effective approach for efficient and flexible transmission and reception of signals in multi-antenna communication devices in 6G.

Optical wireless technology

Optical wireless communication (OWC) is a form of optical communication that uses visible light, infrared light (IR), or ultraviolet light (UV) to carry signals. OWC operating in the visible light band (e.g., 390 to 750 nm) is commonly referred to as visible light communication (VLC). VLC implementations can utilize light-emitting diodes (LEDs). VLC can be used in a variety of applications, including wireless local area networks, wireless personal area networks, and vehicular networks.

VLC has several advantages over RF-based technologies. First, the spectrum occupied by VLC is free/-unlicensed and can provide extensive bandwidth (THz-level bandwidth). Second, VLC rarely causes significant interference to other electromagnetic devices; therefore, VLC can be applied in sensitive electromagnetic interference applications such as aircraft and hospitals. Third, VLC has strengths in communication security and privacy. The transmission medium of VLC-based networks, namely visible light, cannot pass through walls and other opaque obstacles. Therefore, the transmission range of VLC can be limited to indoors, which can protect users' privacy and sensitive information. Fourth, VLC can use any light source as a base station, eliminating the need for expensive base stations.

Free-space optical communication (FSO) is an optical communication technology that uses light propagating in free space, such as air, outer space, and vacuum, to wirelessly transmit data for telecommunications or computer networking. FSO can be used as a point-to-point OWC system on the ground. FSO can operate in the near-infrared frequency (750-1600 nm). Laser transmitters may be used in FSO implementations, and FSO can provide high data rates (e.g., 10 Gbit/s), providing a potential solution to backhaul bottlenecks.

These OWC technologies are planned for 6G communications in addition to RF-based communications for all possible device-to-access networks. These networks will access network-to-backhaul/fronthaul network connections. OWC technology has already been in use since 4G communication systems, but will be more widely used to meet the needs of 6G communication systems. OWC technologies such as light fidelity, visible light communication, optical camera communication, and FSO communication based on optical bands are already well-known technologies. Communication based on optical wireless technology can provide extremely high data rates, low latency, and secure communication.

Light Detection And Ranging (LiDAR) is also based on the optical band and can be utilized in 6G communications for ultra-high resolution 3D mapping. LiDAR is a remote sensing method that uses near-infrared, visible, and ultraviolet light to illuminate an object, and the reflected light is detected by a light sensor to measure distance. LiDAR can be used for fully automated driving of cars.

FSO Backhaul Network

The characteristics of the transmitter and receiver of the FSO system are similar to those of an optical fiber network. Accordingly, data transmission of the FSO system similar to that of the optical fiber system. Accordingly, FSO may be a good technology for providing backhaul connection in the 6G system along with the optical fiber network. When FSO is used, very long-distance communication is possible even at a distance of 10,000 km or more. FSO supports mass backhaul connections for remote and non-remote areas such as sea, space, underwater and isolated islands. FSO also supports cellular base station connections.

Non-Terrestrial Networks (NTN)

The 6G system will integrate terrestrial and aerial networks to support vertically expanding user communications. 3D BS will be delivered via low-orbit satellites and UAVs. Adding a new dimension in terms of altitude and associated degrees of freedom makes 3D connectivity quite different from traditional 2D networks. NR considers Non-Terrestrial Networks (NTNs) as one way to accomplish this. An NTN is a network or network segment that uses RF resources aboard a satellite (or UAS platform). There are two common scenarios for NTNs that provide access to user equipment: transparent payloads and regenerative payloads. The following are the basic elements of an NTN.

- One or more sat-gateways that connect the NTN to the public data network.
- GEO satellites are fed by one or several satellite gateways deployed across the satellite target range (e.g., regional or continental coverage). We assume that the UEs in a cell are served by only one sat-gateway.
- Non-GEO satellites that are continuously serviced by one or multiple satellite gateways at a time. The system ensures service and feeder link continuity between successively serviced satellite gateways with a time duration sufficient to allow for mobility anchoring and handover.
- The feeder link or radio link between the satellite gateway and the satellite (or UAS platform).
- The service link or radio link between the user equipment and the satellite (or UAS platform).
- A satellite (or UAS platform) that can implement transparent or regenerative (with onboard processing) payloads. Satellite (or UAS platform) generated beams typically produce multiple beams for a given service area, depending on the field of view. The footprint of the beam is typically elliptical. The field of view of the satellite (or UAS platform) depends on the onboard antenna diagram and the minimum angle of attack.
- Transparent payload: Radio frequency filtering, frequency conversion, and amplification, so the waveform signal repeated by the payload is unchanged.
- Regenerative payload: radio frequency filtering, frequency conversion and amplification, demodulation/decryption, switching and/or routing, and coding/modulation. This is effectively the same as having all or part of the base station functions (e.g., gNB) on board a satellite (or UAS platform).
- For satellite deployments, optionally an inter-satellite link (ISL). This requires a regenerative payload on the satellite. ISLs can operate at RF frequencies or in the optical band.
- User equipment is served by satellites (or UAS platforms) within the targeted coverage area.

Typically, GEO satellites and UAS are used to provide continental, regional, or local services.
Typically, constellations in LEO and MEO are used to provide coverage in both the Northern and Southern Hemispheres. In some cases, constellations can also provide global coverage, including polar regions. The latter requires proper orbital inclination, sufficient beams generated, and links between satellites.

Quantum Communication

Quantum communication is a next-generation communication technology that can overcome the limitations of conventional communication such as security and high-speed computation by applying quantum mechanical properties to the field of information and communication. Quantum communication provides a means of generating, transmitting, processing, and storing information that cannot be expressed in the form of 0s and 1s according to the binary bit information used in existing communication technologies. In conventional communication technologies, wavelengths or amplitudes are used to transmit information between the transmitting and receiving ends, but in quantum communication, photons, the smallest unit of light, are used to transmit information between the transmitting and receiving ends. In particular, in the case of quantum communication, quantum uncertainty and quantum irreversibility can be used for the polarization or phase difference of photons (light), so quantum communication has the characteristic of being able to communicate with perfect security. In addition, quantum communication can also enable ultra-high-speed communication using quantum entanglement under certain conditions.

Cell-free Communication

Tight integration of multiple frequencies and heterogeneous communication technologies is critical in 6G systems. As a result, users can seamlessly move from one network to another without having to create any manual configurations on their devices. The best network is automatically selected from the available communication technologies. This will break the limitations of the cell concept in wireless communication. Currently, user movement from one cell to other causes too many handovers in dense networks, resulting in handover failures, handover delays, data loss, and ping-pong effects. 6G cell-free communication will overcome all this and provide better QoS.
Cell-free communication is defined as "a system in which a large number of geographically distributed antennas (APs) cooperatively serve a small number of terminals using the same time/frequency resources with the help of a fronthaul network and a CPU". A single terminal is served by a set of multiple APs, which is called an AP cluster. There are several ways to form AP clusters, among which the method of configuring AP clusters with APs that can significantly contribute to improving the reception performance of the terminal is called the terminal-centered clustering method, and when using this method, the configuration is dynamically updated as the terminal moves. By adopting this device-centric AP clustering technique, the device is always at the center of the AP cluster and is therefore free from inter-cluster interference that can occur when the device is located at the boundary of the AP cluster. This cell-free communication will be achieved through multi-connectivity and multi-tier hybrid technologies and different heterogeneous radios in the device.

Integration of Wireless Information and Energy Transfer (WIET)

WIET uses the same field and wave as a wireless communication system. In particular, a sensor and a smartphone will be charged using wireless power transfer during communication. WIET is a promising technology for extending the life of battery charging wireless systems. Therefore, devices without batteries will be supported in 6G communication.

Integration of Wireless Communication and Sensing

An autonomous wireless network is a function for continuously detecting a dynamically changing environment state and exchanging information between different nodes. In 6G, sensing will be tightly integrated with communication to support autonomous systems.

Integrated Access and Backhaul Network

In 6G, the density of access networks will be enormous. Each access network is connected by optical fiber and backhaul connection such as FSO network. To cope with a very large number of access networks, there will be a tight integration between the access and backhaul networks.

Big Data Analysis

Big data analysis is a complex process for analyzing various large data sets or big data. This process finds information such as hidden data, unknown correlations, and customer disposition to ensure complete data management. Big data is collected from various sources such as video, social networks, images and sensors. This technology is widely used for processing massive data in the 6G system.

Reconfigurable Intelligent Surface

There is a large body of research that considers the radio environment as a variable to be optimized along with the transmitter and receiver. The radio environment created by this approach is referred to as a Smart Radio Environment (SRE) or Intelligent Radio Environment (IRE) to highlight its fundamental differences from past design and optimization criteria. Various terms have been proposed for the reconfigurable intelligent antenna (or intelligent reconfigurable antenna technology) technology that enables SRE, including Reconfigurable Metasurfaces, Smart Large Intelligent Surfaces (SLIS), Large Intelligent Surfaces (LIS), Reconfigurable Intelligent Surface (RIS), and Intelligent Reflecting Surface (IRS).
In the case of THz band signals, there are many shadowed areas caused by obstacles due to the strong straightness of the signal, and RIS technology is important to expand the communication area by installing RIS near these shadowed areas, strengthening communication stability and enabling additional value-added services. RIS is an artificial surface made of electromagnetic materials that can alter the propagation of incoming and outgoing radio waves. While RIS can be seen as an extension of massive MIMO, it has a different array structure and operating mechanism than massive MIMO. RIS also has the advantage of lower power consumption because it operates as a reconfigurable reflector with passive elements, meaning it only passively reflects the signal without using an active RF chain. In addition, each of the passive reflectors in the RIS must independently adjust the phase shift of the incident signal, which can be advantageous for wireless communication channels. By properly adjusting the phase shift through the RIS controller, the reflected signal can be gathered at the target receiver to boost the received signal power.
In addition to reflecting radio signals, there are also RISs that can adjust transmission and refraction properties, and these RISs are mainly used for O2I (Outdoor to Indoor). Recently, STAR-RIS (Simultaneous Transmission and Reflection RIS), which provides transmission while reflecting, has also been actively researched.

Metaverse

Metaverse is a portmanteau of the words "meta" meaning virtual, transcendent, and "universe" meaning space. Generally speaking, the metaverse is a three-dimensional virtual space where the same social and economic activities as in the real world are commonplace.

Extended Reality (XR), a key technology enabling the Metaverse, is the fusion of the virtual and the real, which can extend the experience of reality and provide a unique sense of immersion. The high bandwidth and low latency of 6G networks will enable users to experience more immersive virtual reality (VR) and augmented reality (AR) experiences.

Autonomous Driving, Self-driving

For perfect autonomous driving, vehicles must communicate with each other to inform each other of dangerous situations, or with infrastructure such as parking lots and traffic lights to check information such as the location of parking information and signal change times. Vehicle-to-Everything (V2X), a key element in building an autonomous driving infrastructure, is a technology that enables vehicles to communicate and share information with various elements on the road, such as vehicle-to-vehicle (V2V) and vehicle-to-infrastructure (V2I), for autonomous driving.

In order to maximize the performance of autonomous driving and ensure high safety, fast transmission speeds and low latency technologies are essential. In addition, in the future, autonomous driving will go beyond delivering warnings and guidance messages to the driver to actively intervene in vehicle operation and directly control the vehicle in dangerous situations, and the amount of information that needs to be transmitted and received will be enormous, so 6G is expected to maximize autonomous driving with faster transmission speeds and lower latency than 5G.

Unmanned Aerial Vehicle (UAV)

An unmanned aerial vehicle (UAV) or drone will be an important factor in 6G wireless communication. In most cases, a high-speed data wireless connection is provided using UAV technology. A base station entity is installed in the UAV to provide cellular connectivity. UAVs have certain features, which are not found in fixed base station infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communications. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.

Block-chain

A blockchain will be important technology for managing large amounts of data in future communication systems. The blockchain is a form of distributed ledger technology, and distributed ledger is a database distributed across numerous nodes or computing devices. Each node duplicates and stores the same copy of the ledger. The blockchain is managed through a peer-to-peer (P2P) network. This may exist without being managed by a centralized institution or server. Blockchain data is collected together and organized into blocks. The blocks are connected to each other and protected using encryption. The blockchain completely complements large-scale IoT through improved interoperability, security, privacy, stability and scalability. Accordingly, the blockchain technology provides several functions such as interoperability between devices, high-capacity data traceability, autonomous interaction of different IoT systems, and large-scale connection stability of 6G communication systems.

<Service Request procedures>

The service request procedure is used to request establishment of a secure connection to AMF by a UE or a 5G core network (5GC). The service request procedure is used to activate the user plane connection of the established PDU session even when the UE is in a CM-IDLE state and a CM-CONNECTED state. For reference, in order to reflect NAS signaling connection between the AMF and the UE, two CM states of the CM-IDLE state and the CM-CONNECTED state are used.

The UE does not initiate a service request procedure if there is an ongoing service request procedure.

The service request procedure includes a service request procedure initiated by the UE (i.e., a UE triggered service request) and a service request procedure initiated by the network (i.e., a network triggered service request).

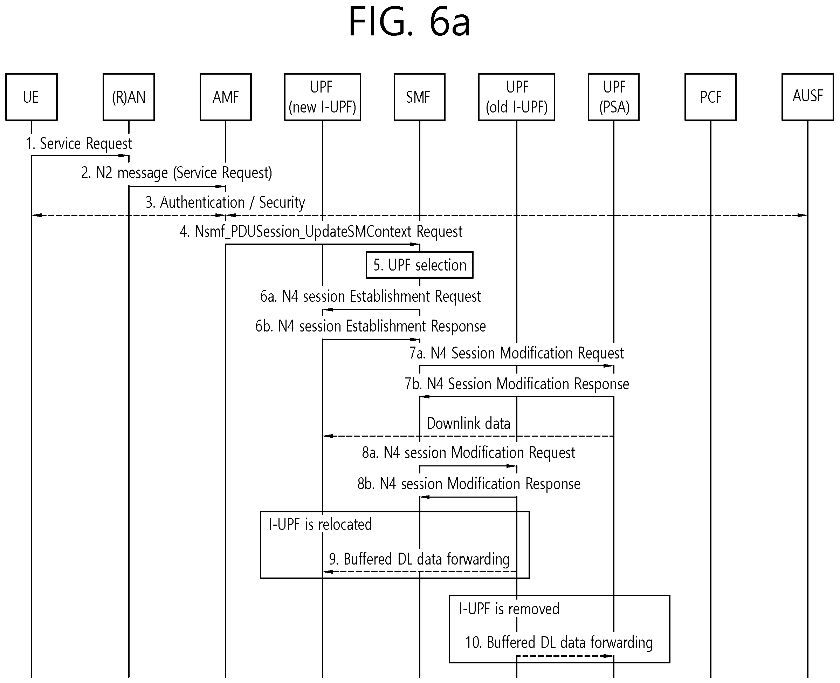

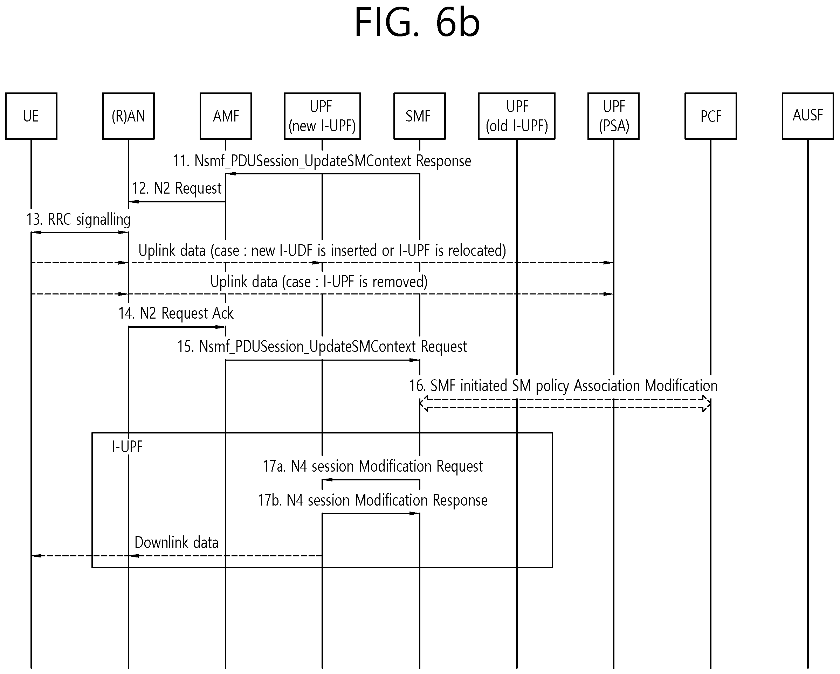

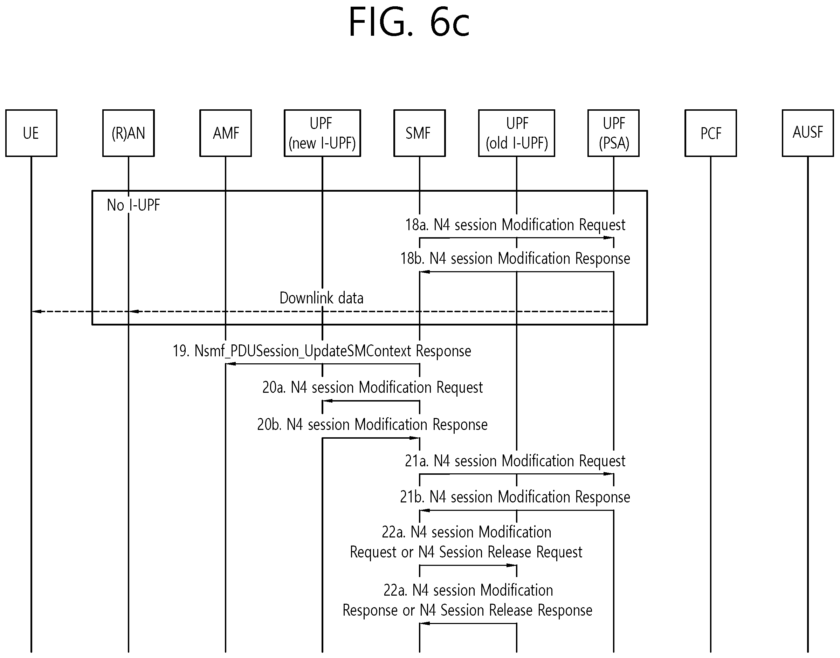

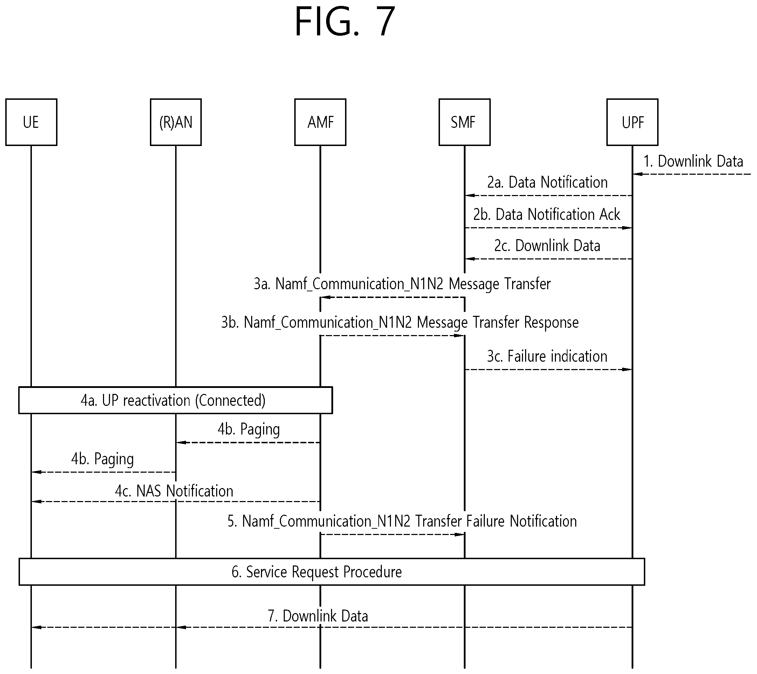

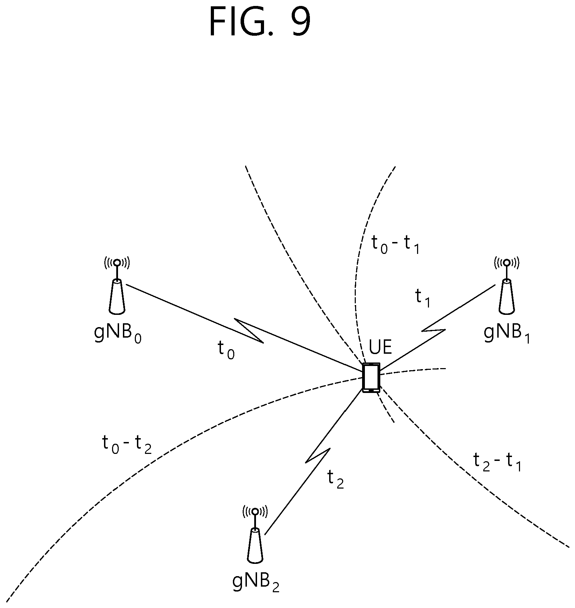

Hereinafter, an example of the UE triggered service request procedure will be described with reference to FIGS. 6a to 6c, and an example of the network triggered service request procedure will be described with reference to FIG. 7. The service request procedure described in FIGS. 6a to 6c and 9 is only an example, and the service request procedure in the present disclosure includes all the service request procedures triggered by the UE and all the service request procedures triggered by the network.

**FIGS. 6a to 6c are signal flowcharts illustrating an exemplary UE triggered service request procedure.**

The UE in the CM-ILDE state initiates a service request procedure to transmit a response on an uplink signaling message, user data, or network paging request. After receiving the service request message, the AMF may perform authentication. After establishing a signaling connection for AMF, the UE or the network may transmit a signaling message (e.g., establishment of a PDU session from the UE to the SMF through the AMF).

The service request procedure may be used by a UE in CM-CONNECTED state to request activation of a user plane connection for a PDU session and to respond to a NAS notification message received from the AMF.

For any service request procedure, if necessary, the AMF may include state information of the PDU session in a service accept message to synchronize a PDU session state between the UE and the network.

If the service request is not accepted by the network, the AMF responds to the UE with a service reject message. The service rejection message may include an indication or a cause code for requesting that the UE perform a registration update procedure.

In the UE triggered service request procedure, both SMF and UPF belong to a PLMN that serves the UE. For example, in a home routed roaming case, the SMF and UPF of the HPLMN are not affected by the service request procedure (that is, the SMF and UPF of the HPLMN are not involved in the service request procedure).

In response to a service request according to user data, the network may take additional action if the user plane connection activation is not successful.

The UE triggered service request procedure may be applied to a scenario with or without an intermediate UPF and a scenario with or without an intermediate UPF reselection.

1) Signaling from UE to (R)AN: the UE may transmit an access network (AN) message (including AN parameters, service request (list of PDU sessions to be activated, list of allowed PDU sessions), security parameters and PDU session status (status)) to the (R)AN.

2) (R)AN to AMF signaling: (R)AN may transmit an N2 message to AMF. The N2 message may include N2 parameters, a service request, and a UE context request.

3a) Signaling from AMF to (R)AN: AMF may transmit an N2 request to (R)AN. Here, the N2 request may include a security context, a handover restriction list, and a list of recommended cells/TAs/NG-RAN node identifiers.

3) If the service request is not transmitted as being integrity protected or integrity protection verification failed, the AMF may initiate a NAS authentication/security procedure.

4) [Conditional Operation] Signaling from AMF to SMF: The AMF may transmit an Nsmf_PDUSession_UpdateSMContext Request to the SMF. Here, the Nsmf_PDUSession_UpdateSMContext Request may include a PDU session ID, operation type, UE location information, access type, RAT type, and UE presence in LADN service area.

5) If the PDU session ID corresponds to the LADN and the SMF determines that the UE is located outside the available area of the LADN based on the "UE presence in the LADN service area" provided by the AMF, the SMF may determine to perform the following actions (based on a local policy).

- SMF may maintain the PDU session. However, the SMF may reject the activation of the user plane connection of the PDU session and notify the AMF accordingly. When the service request procedure is triggered by the network initiated service request of FIG. 7, the SMF may notify the UPF (UPF that has sent data notification) that the UPF should discard downlink data for the PDU session and/or should not provide an additional data notification message; or
- The SMF may release the PDU session: The SMF may release the PDU session and inform the AMF that the PDU session has been released.
- In the above two cases, the SMF responds to the AMF with an appropriate reject cause, and user plane activation of the PDU session may be stopped.

When the SMF determines that the UE is located in the LADN available area, the SMF may check a UPF selection criterion based on the location information received from the AMF and determine to perform one of the following operations:

- The SMF accepts the activation of the UP connection and may continue to use the current UPF;
- When the UE moves outside the service area of the UPF (the UPF previously connected to the AN), the SMF, while maintaining the UPF acting as a PDU session anchor, may accept activation of the UP connection and select a new intermediate UPF (or may add/remove intermediate UPFs (I-UPF)). The steps to perform the addition/change/removal of the I-UPF are described below through conditional steps.
- The SMF may reject activation of the UP connection of the PDU session in session and service continuity (SSC) mode 2. In addition, after the service request procedure, the SMF may trigger re-establishment of a PDU session in order to perform allocation of a new UPF (UPF acting as a PDU session anchor). (This operation may be performed, for example, when the UE is moved outside the service area of the anchor UPF connected to the NG-RAN)

6a) [Conditional operation] Signaling from SMF to new UPF (or new I-UPF): The SMF may transmit an N4 session establishment request to the UPF.

6b) Signaling from new UPF (or I-UPF) to the SMF: The new UPF (or I-UPF) may transmit an N2 session establishment response (N4 Session establishment response) to the SMF.

7a) [Conditional operation] Signaling from SMF to UPF (PSA: PDU session anchor) signaling: SMF may transmit an N4 session modification request to the UPF.

7b) The UPF (PSA) may transmit an N4 session modification response message to the SMF.

When the UPF (PSA) receives the data forwarding indication, the UPF (PSA) becomes an N3 endpoint and the UPF (PSA) may transmit CN DL tunnel information for the previous UPF (or I-UPF) to the SMF. The SMF may start a timer. If the previous I-UPF resource exists, the SMF may drive a timer to be used in step 22a in order to release the corresponding resource.

8a) [Conditional operation] Signaling from SMF to existing UPF (or I-UPF): The SMF may transmit N4 session modification (including new UPF address, new UPF DL tunnel ID) to the existing UPF (or I-UPF).

8b) Signaling from the existing UPF (or I-UPF) to the SMF: The existing UPF (or I-UPF) may transmit an N4 session modification response message to the SMF.

9) [Conditional operation] Signaling from an existing UPF (or I-UPF) to a new UPF (or I-UPF): The existing UPF (or I-UPF) may deliver downlink data buffered with a new UPF (or I-UPF).

10) [Conditional operation] Signaling from the existing UPF (or I-UPF) to the UPF (PSA): The existing UPF (or I-UPF) may transfer buffered downlink data to the UPF (PSA).

11) [Conditional Operation] Signaling from SMF to AMF: SMF may transmit Nsmf_ PDUSession_UpdateSMContext Response to AMF. Nsmf_PDUSession_UpdateSMContext Response may include N2 SM information (PDU session ID, QFI(s) (QoS Flow ID), quality of service (QoS) profile, CN N3 tunnel information, S-NSSAI, user plane security enforcement, UE integrity protection maximum data rate, and a cause. When the UPF connected to the RAN is UPF (PSA), the CN N3 tunnel information is UL tunnel information of UPF (PSA). When the UPF connected to the RAN is a new I-UPF, the CN N3 tunnel information is UL tunnel information of the I-UPF.

The SMF may reject the activation of the UP of the PDU session by including the cause in the Nsmf_PDUSession_UpdateSMContext Response. The SMF may reject activation of the UP of the PDU session in the following cases, for example:

- When the PDU session corresponds to the LADN and the UE is located outside the available area of the LADN as in step 5;
- When the AMF informs the SMF that the UE is reachable only for a regulatory prioritized service and the PDU session to be activated is not for the regulatory prioritized service; or
- When the SMF determines to change the PSA UPF for the requested PDU session as in step 5. In this case, after the SMF transmits the Nsmf_PDUSession_UpdateSMContext Response, the SMF may perform another procedure to instruct the UE to re-establish the PDU session for SSC mode 2.
- If the SMF receives a negative response in step 6b due to UPF resource unavailability.

12) Signaling from AMF to (R)AN: The AMF may transmit an N2 request to (R)AN. N2 request may include N2 SM information received from the SMF, security context, handover restriction list, subscribed UE-aggregate maximum bit rate (AMBR), MM NAS service acceptance (a list of recommended cells/TAs/NG-RAN node identifiers, and UE radio capability. Allowed NSSAI for the access type of the UE may be included in the N2 message.

13) Signaling from (R)AN to UE: The NG-RAN may perform RRC connection reconfiguration with the UE. Specifically, the NG-RAN may perform RRC connection reconfiguration with the UE according to QoS information related to all QoS flows of a data radio bearer and a PDU session in which the UP connection is activated. For the UE that was in the CM-IDLE state, if the service request is not triggered by the UE only for a signaling connection, user plane security may be established in this step. For the UE in the CM-IDLE state, when a service request is triggered by the UE only for signaling connection, the AS security context may be established in this step.

14) [Conditional operation] Signaling from (R)AN to AMF: The (R)AN may transmit acknowledgement for N2 request to the AMF. For example, the (R)AN may transmit an N2 request Ack to the AMF. Here, the N2 request Ack may include N2 SM information (including AN tunnel information, list of accepted QoS flows for the PDU sessions whose UP connections are activated and a list of rejected QoS Flows for the PDU Sessions whose UP connections are activated) and a PDU session ID.

15) [Conditional operation] Signaling from AMF to SMF: The AMF may transmit an Nsmf_PDUSession_UpdateSMContext request (including N2 SM information, RAT type, and access type) per PDU session to the SMF. The AMF may determine the access type and the RAT type based on the global RAN node ID associated with the N2 interface.

16) [Optional action] Signaling from SMF to PCF: When dynamic PCC is distributed, SMF performs SMF initiated SM policy modification procedure to initiate notification of new location information to the PCF (if subscribed). The PCF may provide updated policies.

17a) [Conditional operation] Signaling from the SMF to new I-UPF: The SMF may transmit an N4 session modification request to a new I-UPF. The N4 session modification request may include AN tunnel information and a list of accepted QFIs.

17b) [Conditional Operation] Signaling from UPF to SMF: The UPF may transmit an N4 session modification response to the SMF.

18a) [Conditional operation] Signaling from SMF to UPF (PSA): The SMF may transmit an N4 session modification request to UPF (PSA). The N4 session modification request may include AN tunnel information and a list of rejected QoS flows.

18b) [Conditional operation] Signaling from UPF to SMF: The UPF may transmit an N4 session modification response to the SMF.

19) [Conditional operation] Signaling from SMF to AMF: The SMF may transmit an Nsmf_PDUSession_UpdateSMContext response to the AMF.

20a) [Conditional operation] Signaling from SMF to new UPF (or I-UPF): The SMF may transmit an N4 session modification request to a new UPF (or I-UPF).

20b) [Conditional operation] Signaling from new UPF (or I-UPF) to SMF: The new UPF (or I-UPF) may transmit an N4 session modification response to the SMF.

21a) [Conditional operation] Signaling from SMF to UPF (PSA): The SMF may transmit an N4 session modification request to the UPF (PSA).

21b) [Conditional operation] Signaling from UPF (PSA) to SMF: UPF (PSA) may transmit an N4 session modification response to the SMF.

22a) [Conditional operation] Signaling from SMF to previous UPF: The SMF may transmit an N4 session modification request or an N4 session release request to the previous UPF.

22b) Signaling from previous I-UPF to the SMF: The previous I-UPF may transmit an N4 session modification response or an N4 session release response to the SMF.

**FIG. 7 is a signal flowchart illustrating an exemplary network initiated service request procedure.**

The network initiated service request procedure is used when there is a need for activating a user plane for the PDU session to transfer signaling (e.g., N1 signaling to the UE, mobile-terminated short message service (SMS)), mobile terminating (a destination of data is UE) user data with the UE.

When the network initiated service request procedure is triggered by a short message service function (SMSF), PCF, location management function (LMF), gateway mobile location center (GMLC), NEF or UDM, the SMF in FIG. 7 may be replaced by a corresponding NF. For example, when the network initiated service request procedure is triggered by the PCF, the PCF may perform operations performed by the SMF of FIG. 7.

When the UE is in the CM-IDLE state or the CM-CONNECTED state in 3GPP access, the network initiates a network service request procedure.

When the UE is in the CM-IDLE state and asynchronous type communication is not activated, the network may transmit a paging request to the (R)AN/UE. The paging request triggers a UE initiated service request procedure in the UE. When asynchronous type communication is activated, the network stores the received message, and when the UE enters the CM-CONNECTED state, the network may transfer the received message to the (R)AN and/or the UE.

When the UE is in the CM-IDLE state in non-3GPP access and the UE is simultaneously registered for 3GPP access and non-3GPP access in one public land mobile network (PLMN), the network may initiate the network initiated service request procedure via 3GPP access.

When the UE is in the CM-IDLE state in 3GPP access, in the CM-CONNECTED state in non-3GPP access, and the UE is simultaneously registered for 3GPP access and non-3GPP access in one PLMN, the network may initiate the network initiated service request procedure through 3GPP access.

In the network initiated service request procedure, both SMF and UPF belong to a PLMN serving the UE. For example, in a home routed roaming case, the SMF and UPF of a HPLMN are not affected by a service request procedure (that is, the SMF and UPF of the HPLMN are not involved in the service request procedure).

The procedure of FIG. 7 deals with a non exhaustive list of use-cases for 3GPP access as follows (detailed conditions to which each step is applied are described in the procedure below.):

- When the SMF needs to set up an N3 tunnel in order to deliver a downlink packet for a PDU session to the UE and the UE is in the CM-IDLE state: Step 3a includes an N2 message and step 4b (paging) may be performed.
- When the SMF needs to set up an N3 tunnel in order to deliver a downlink packet for a PDU session to the UE and the UE is in a CM-CONNECTED state: Step 3a includes an N2 message and step 4a (UP activation) may be performed.
- If an NF (e.g., SMF, SMSF, LMF or NEF) needs to transmit an N1 message to the UE and the UE is in the CM-IDLE state: Step 3a includes an N1 message, step 3b includes a cause "Attempting to reach UE", and step 4b (paging) occurs.

- When the NF (e.g., SMSF, PCF, or UDM) triggers the AMF to set up a NAS connection with the UE and the UE is in the CM-IDLE state: Trigger differ according to procedures, step 4b (paging) is occurs.

1) When the UPF receives downlink data for the PDU session and AN tunnel information for the PDU session is not stored in the UPF, the UPF may buffer the downlink data or transfer the downlink data to the SMF based on an instruction received from the SMF.

2a) Signaling from the UPF to the SMF: The UPF may transmit a data notification to the SMF. The data notification may include an N4 session ID, information for identifying a QoS flow for a DL data packet, and DSCP.

2b) Signaling from SMF to UPF: A data notification Ack may be transmitted.

2c) When the SMF instructs the UPF that it will buffer the data packet, the UPF may deliver the downlink data packet to the SMF.

3a) [Conditional operation] i) Signaling from SMF to AMF: The SMF may transmit a Namf_Communication_N1N2-MessageTransfer (including SUPI, PDU session ID, N2 SM information (including QFI(s), QoS profile(s), CN N3 tunnel information, S-NSSAI, and paging policy indication), area of validity for N2 SM information, ARP (Allocation and Retention Priority) including paging policy indication, 5QI and N1N2TransferFailure notification target address) to the AMF. Or, ii) signaling from NF to AMF: NF may transmit Namf_Communication_N1N2MessageTransfer (including SUPI and N1 messages) to the AMF.

3b) [Conditional operation] The AMF may respond to the SMF.

If the UE is in the CM-IDLE state for the AMF and the AMF may page the UE, the AMF may directly transmit a Namf_Communication_N1N2MessageTransfer response to the SMF with the cause "Attempting to reach UE". The cause "Attempting to reach UE" may indicate to the SMF that the N2 SM information provided in step 3a may be ignored by the AMF if the UE is reachable and that the SMF is requested to provide the N2 SM information again.

3c) [Conditional operation] SMF may respond to UPF. For example, the SMF may transmit a failure indication to the UPF.

The SMF may notify the UPF of a user plane setup failure.

4a) [Conditional operation] When the UE is in the CM-CONNECTED state in the access related to the PDU session ID received from the SMF in step 3a, steps 12 to 22 of FIGS. 6a to 6c may be performed without transmitting a paging message to the (R)AN node and the UE to activate the user plane connection for the PDU session (e.g., radio resources and N3 tunnels may be established). In step 12 of FIGS. 6a to 6c, the AMF may not transmit a NAS service accept message to the UE. Parts other than steps 12 to 22 of FIGS. 6a to 6c may be omitted.

4b) [Conditional operation] Even when the UE is in the CM-IDLE state in 3GPP access, the PDU session ID received from the SMF in step 3a is related to the 3GPP access, and the UE is in the CM-CONNECTED state for non-3GPP access, if the AMF determines to notify the UE through 3GPP access based on the local policy, the AMF may transmit a paging message to the NG-RAN node through 3GPP access.

4c) [Conditional operation] When the UE is simultaneously registered for 3GPP access and non-3GPP access in the same PLMN, the UE is in the CM-CONNECTED state in 3GPP access, and the PDU session ID of step 3a is associated with the non-3GPP access, the AMF may transmit a NAS notification message including a non-3GPP access type to the UE through 3GPP access and may set a notification timer. When step 4c is performed, step 5 may be omitted.

5) [Conditional operation] Signaling from AMF to SMF: The AMF may transmit a notification related to failure of Namf_Communication_N1N2Transfer to the SMF. For example, the AMF may transmit a Namf_Communication_N1N2-TransferFailure notification to the SMF.

6) When the UE is in the CM-IDLE state in 3GPP access and a paging request for a PDU session related to 3GPP access is received, the UE may initiate the UE initiated service request procedure described in FIGS. 6a to 6c. In step 4 of FIG. 6a, the AMF may call a Nsmf_PDUSession_UpdateSMContext request associated with a PDU session identified in the service request message (excluding the PDU session for the PDU session ID included in Namf_Communication _N1N2MessageTransfe in step 3a of FIG. 7) to the SMF. To support the transfer of buffered data, the SMF may instruct the UPF to establish a data transfer tunnel between the old UPF and the new UPF or PSA as described in steps 6a, 7a, and 8b of FIG. 6a.

7) The UPF may transmit buffered downlink data to the UE through the (R)AN node that has performed the service request procedure.

The network may transmit downlink signaling when a network initiated service request procedure is initiated according to a request from another network described in step 3a.

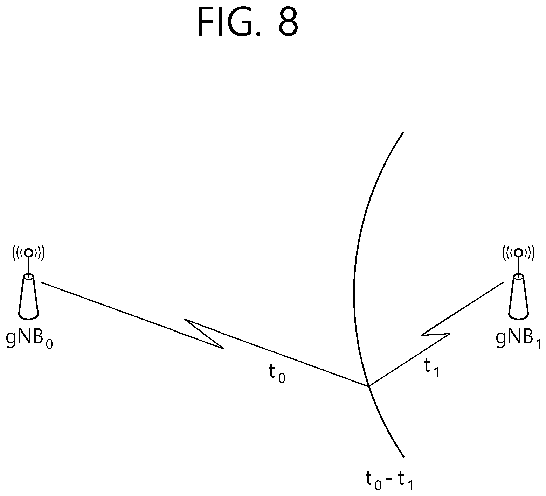

In the following, examples of positioning methods based on 5G communications will be described with reference to the examples of FIGS. 8 through 11.

In the following, five methods (i.e. DL-TDOA, UL-TDOA, Multi-cell RTT, UL-AOA, DL-AOD) are described.

The examples in Figure 8 and Figure 9 are examples of DL-TDOAs.

Based on the Positioning Reference Signal (PRS), the UE may measure the time difference between gNBs. For example, gNBs may transmit PRS to the UE. Then, the UE may know when the PRS transmitted by multiple gNBs is received. For example, an example in the case of two gNBs is shown in Figure 8.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

FIG. 8 shows a first example of positioning based on DL-TDOA.

The two gNBs (gNB0 and gNB1) shown in FIG. 8 may be synchronized. Then, if the UE knows the time difference between the two gNBs, it can draw the parabola shown in the example in FIG. 8.

An example of measuring the time difference from three gNBs is shown in FIG. 9.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

FIG. 9 is a second example of positioning based on DL-TDOA.

The UE may measure the time difference from at least three gNBs. The UE or LMF may then estimate the location of the UE, as illustrated in the example of FIG. 9. The measurement metric for positioning based on DL-TDOA may be the reference signal time difference (RSTD). The UE may measure the RSTD. For example, the UE may measure the RSTD between gNB0 and gNB1, the RSTD between gNB0 and gNB2, and the RSTD between gNB0 and gNB2. If more gNBs are present, the UE may measure more RSTD values. The LMF can manage the gNBs to participate in the DL-TDOA, and the UE can measure the RSTD value between all gNBs. Depending on the UE capability, the UE may perform the positioning calculation or the LMF may perform the positioning calculation. The UE capability may be, for example, UE-based or UE-assisted. UE-based can mean that the UE directly performs the action of calculating the UE's position. UE-assisted may mean that the UE assists the LMF in calculating the UE's position.

For positioning based on UL-TDOA, the UE may transmit a sounding reference signal (SRS). The SRS transmitted by the UE may be received by multiple gNBs. The multiple gNBs may forward the time information received from the UE to the location server. Then, the location server (e.g., LMF) or the UE can calculate the time difference between the UE and each gNB and estimate the UE location.

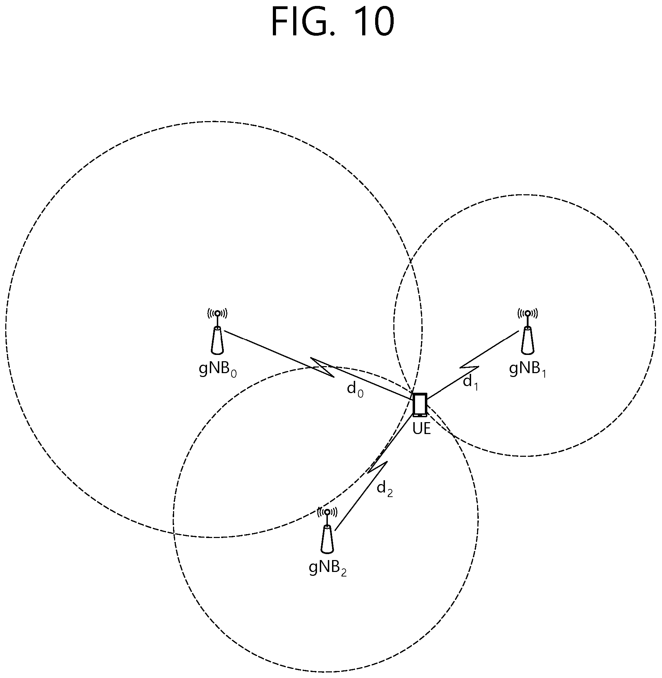

Referring to FIG. 10, an example of Multi-cell RTT is illustrated.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

FIG. 10 is an example of positioning based on Multi-cell RTT.

The UE measures the round trip time between the UE and the gNB by measuring the UE Rx-Tx time difference and the gNB measures the gNB Rx-Tx time difference. Unlike DL-TDOA and UL-TDOA, positioning based on multi-cell RTT has the advantage that it is not affected by synchronization error between gNBs. However, positioning based on Multi-cell RTT requires both UL and DL resources to be used, so it may be a high overhead positioning method. The distance between the UE and the gNBs can be measured through the round trip time, and based on the distance measurement with at least three gNBs, the LMF or UE can predict the location of the UE.

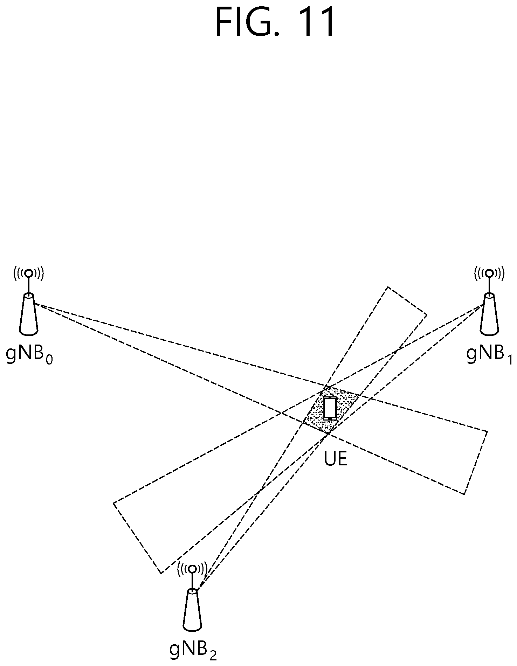

Referring to FIG. 11, positioning based on UL-AOA is illustrated.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

FIG. 11 is an example of positioning based on UL-AOA.

The UE transmits the SRS. The multiple gNBs may then measure the Uplink Angle of Arrival for the SRS transmitted by the UE. Based on the measurement results, the UE or LMF can estimate the location of the UE.

Positioning based on DL-AOD is as follows The gNB may transmit a reference signal. Then, by measuring the reference signal transmitted by the gNB, the UE may find the downlink Angle of Departure. Based on the downlink angle of departure, the UE can estimate the location of the UE.

However, the five positioning methods described above (e.g., DL-TDOA, UL-TDOA, Multi-cell RTT, UL-AOA, and DL-AOD) all suffer from weaknesses in non line of sight (NLOS) environments. For example, all five positioning methods assume that the signal transmission path between the UE and the gNB is in a straight line. However, in indoor environments, where there are relatively more obstacles as opposed to outdoor environments, the path between the UE and the gNB may be based on NLOS conditions. Therefore, the positioning of UEs in NLOS environments with the five positioning methods proposed in the literature suffers from very low accuracy and inefficiency.

The present disclosure describes an example of a method for improving indoor positioning accuracy based on NR communications. In the prior art, a UE or gNB (or eNB) measures a distance or direction between the UE and the eNB/gNB, and a UE or LMF estimates the UE's location. For example, the UE may measure RSTD, UE Rx-Tx Time difference, and/or DL-AOD. For example, the gNB may measure RTOA, gNB Rx-Tx Time difference, and/or UL-AOA. For example, the UE may estimate the location of the UE based on the RTOA, gNB Rx-Tx Time difference, and/or UL-AOA, and the LMF may estimate the location of the UE based on the UL-TDOA, Multi-cell RTT, and/or UL-AOA. In the prior art, the location of the UE is predicted based on the assumption of a straight line distance between the UE and the eNB/gNB. According to the positioning method based on this assumption, the position of the UE can be predicted accurately enough in open areas. However, in an indoor environment with many obstacles, this approach is not suitable. Therefore, in an indoor environment with many obstacles, when positioning the UE according to the prior art, the position of the UE cannot be accurately predicted or measured. Various examples of the present disclosure propose methods to address these problems.

Positioning techniques based on 3GPP communications in conventional 4G/5G estimated the position of the UE based on the following example. For example, estimating the distance between the UE and the eNB/gNB based on the difference in signal arrival time between the UE and the eNB/gNB and estimating the location of the UE, or utilizing signal direction information between the UE and the eNB/gNB to estimate the location of the UE.

Positioning methods based on 3GPP communications have evolved, primarily to improve accuracy, increase reliability, and/or reduce latency and power consumption.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

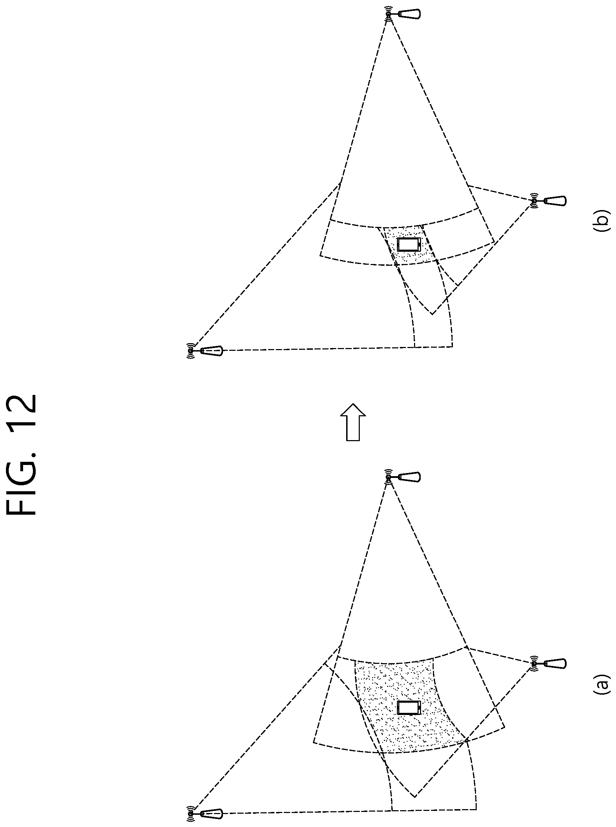

FIG. 12 is an example of a positioning method for an outdoor environment according to the prior art.

As shown in FIG. 12, positioning methods based on 3GPP communications have evolved to improve accuracy in outdoor environments from (a) to (b). For example, the area estimated as the location of the UE in (b) is smaller than in (a).

However, these conventional positioning techniques are suitable for LOS environments where there are no obstacles between the UE and the eNB/gNB. In an indoor environment with many obstacles, the positioning accuracy, reliability, etc. are reduced. To address the problem of prior art positioning techniques having very poor accuracy in indoor environments, various examples are described herein to improve the accuracy and/or reliability of positioning in indoor environments.

There are, for example, five positioning methods based on 3GPP communications, as described earlier (e.g., DL-TDOA, UL-TDOA, Multi-cell RTT, UL-AoA, and DL-AoD).

- DL-TDOA (DownLink - Time Difference Of Arrival)
- UL-TDOA (UpLink - Time Difference Of Arrival)
- Multi-cell RTT (Multi-cell Round Trip Time)
- UL-AoA (UpLink-Angle Of Arrival)
- DL-AoD (DownLink-Angle Of Departure)

The detailed behavior of the above five methods has been previously described with reference to FIGS. 8 through 11. For each positioning method, the metric measured by the UE or gNB may be different. The metric measured by the UE or gNB may refer to, for example, a parameter that is used as a result of the measurement. For example, as shown in the example below, various metrics may be used, such as DL RSTD UL RTOA UE Rx-Tx time difference gNB Rx-Tx time difference UL AoA (UL Angle of Arrival) DL PRS-RSRPP (DL PRS reference signal received path power), etc.

For reference, the specific description of these metrics can be found in 3GPP TS38.215 17.1.0.

Describe an example of DL-TDOA (DownLink - Time Difference Of Arrival).

An example of DL-TDOA is DL RSTD (DownLink Reference Signal Time Difference).

DL reference signal time difference (DL RSTD) is the DL relative timing difference between Transmission Point (TP) j and reference TP i, defined as $T_{SubframeRxj} - T_{SubframeRxi}$,

Where:

$T_{SubframeRyj}$ is the time at which the UE receives the start of one subframe from TP j.

$T_{SubframeRxi}$ is the time at which the UE receives the corresponding start of one subframe from TP i, which is temporally closest to the subframe received from TP j.

Multiple DL PRS resources can be used to determine the start of one subframe in a TP.

For FR 1, the reference point of the DL RSTD is the antenna connector of the UE. For FR 2, the reference point of the DL RSTD is the UE's antenna.

DL RSTD is applicable to RRC_CONNECTED state and RRC _INACTIVE state.

Describe an example of UL-TDOA (UpLink - Time Difference Of Arrival).

One example of UL-TDOA is UL RTOA (UpLink Relative Time Of Arrival) ($T_{UL-RTOA}$).

UL RTOA ($T_{UL-RTOA}$) may be based on the start of the subframe i containing the SRS received at Reception Point (RP) j based on the RTOA reference time.

The UL RTOA reference time is defined as $T_0+t_{SRS}$.

- $T_0$ is the nominal beginning time of SFN 0, provided by the SFN Initialization Time.
- $t_{SRS}=(10n_f+n_{sf})*10^{-3}$, where nf and nsf are the system frame number and the subframe number of the SRS, respectively.

Multiple SRS resources may be used to determine the start of one subframe containing the SRS received from the RP.

Reference points for $T_{UL-RTOA}$ are as the following:

- For a type 1-C base station: The receive antenna connector,
- For a type 1-O or 2-O base station: the receive antenna (e.g., the center location of the Rx antenna's radiation area),
- For a type 1-H base station: the Rx transceiver array boundary connector.

An example of Multi-cell Round Trip Time (RTT) is described.

An example of a multi-cell RTT is the UE Rx-Tx time difference.

The UE Rx - Tx time difference is defined as $T_{UE-RX} - T_{UE-TX}$.

Where:

$T_{UE-RX}$ is the timing of the UE receiving downlink subframe #i from the TP, defined by the first detected path in time.

$T_{UE-TX}$ is the timing of the UE transmission of uplink subframe #j in the time zone closest to subframe #i received from the TP.

Depending on the instructions from higher layers, multiple DL PRSs or CSI-RSs for resource tracking may be used to determine the start of one subframe of the first arrival path of the TP.

For FR 1, the reference point for $T_{UE-RX}$ measurement is the Rx antenna connector of the UE and the reference point for $T_{UE-TX}$ measurement is the Tx antenna connector of the UE. For FR 2, the reference point for $T_{UE-RX}$ measurement is the UE's Rx antenna and the reference point for TUE-TX measurement is the UE's Tx antenna.

UE Rx-Tx time difference is applicable for RRC _CONNECTED state and RRC_INACTIVE state.

Describe an example of gNB Rx-Tx time difference.

The gNB Rx - Tx time difference is defined as $T_{gNB-RX} - T_{gnB-TX}$.

Where:

$T_{gNB-RX}$ is the timing received at the Transmission and Reception Point (TRP) of the uplink subframe #i including the SRS associated with the UE, defined by the first detected path in time.

TgNB-TX is the TRP transmission timing of the downlink subframe #j in the time zone closest to the subframe #i received from the UE.

Multiple SRS resources can be used to determine the start of one subframe containing SRS.

The reference points for TgNB-RX are as follows

- For type 1-C base stations: Receiving antenna connector,
- For a type 1-0 or 2-0 base station: The receiving antenna (for example, the center location of the Rx antenna's radiation area),
- for a type 1-H base station: the Rx transceiver array boundary connector.

The reference points for $T_{gNB-TX}$ are as follow: s

- For a type 1-C base station: the Tx antenna connector,
- For a type 1-0 or 2-0 base station: the Tx antenna (e.g., the center location of the Tx antenna's radiation area),
- for a type 1-H base station: the Tx transceiver array boundary connector.

Describe an example of an UpLink-Angle Of Arrival (UL-AoA).

UL AoA is defined as the estimated azimuth angle (A-AoA) and vertical angle (Z-AoA) of a UE with respect to a reference direction, wherein the reference direction is defined:

The UL AoA is defined as the estimated azimuth angle (A-AoA) and vertical angle (Z-AoA) of the UE with respect to the reference direction, where the reference direction is defined as follows:

- In the global coordinate system (GCS), the estimated azimuth is measured relative to geographic north and is positive counterclockwise, and the estimated vertical angle is measured relative to zenith and is positive horizontally.
- In the local coordinate system (LCS), the estimated azimuth is measured relative to the x-axis of the LCS and is positive in the counterclockwise direction, and the estimated vertical angle is measured relative to the z-axis of the LCS and is positive in the x-y plane direction.

The UL-AoA is determined at the gNB antenna for the UL channel corresponding to this UE.

Describes an example of a DownLink-Angle Of Departure (DL-AoD).

One example of DL-AoD is DL PRS reference signal received path power (DL PRS-RSRPP).

DL PRS-RSRPP is defined as the power of the linear average of the channel response at the i-th path delay of the resource element carrying the DL PRS signal set for measurement. Where DL PRS-RSRPP for the first path delay is the power contribution corresponding to the first detected path in time.

For FR 1, the reference point for DL PRS-RSRPP is the antenna connector of the UE. For FR 2, DL PRS-RSRPP is measured based on the combined signal of the antenna elements corresponding to a given receiver branch.

For FR 1 and FR 2, if receiver diversity is being used by the UE for DL PRS-RSRPP measurements, the reported DL PRS-RSRPP value contained in the upper layer parameter NR-DL-AoD-MeasElement for the first measurement and further measurements shall be provided for the same receiver branch as applied for the DL PRS-RSRP measurement.

DL PRS-RSRPP is applicable to RRC _CONNECTED state and RRC_INACTIVE state.

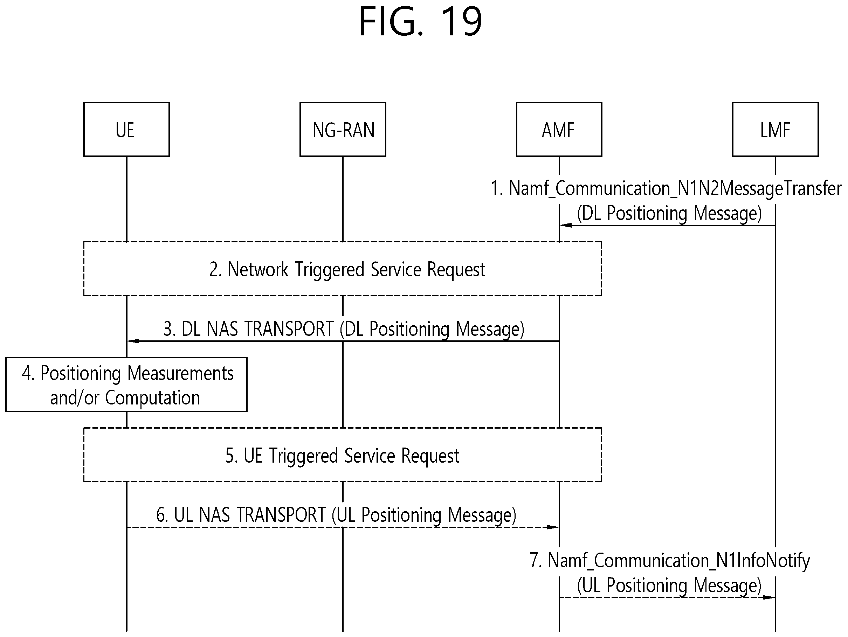

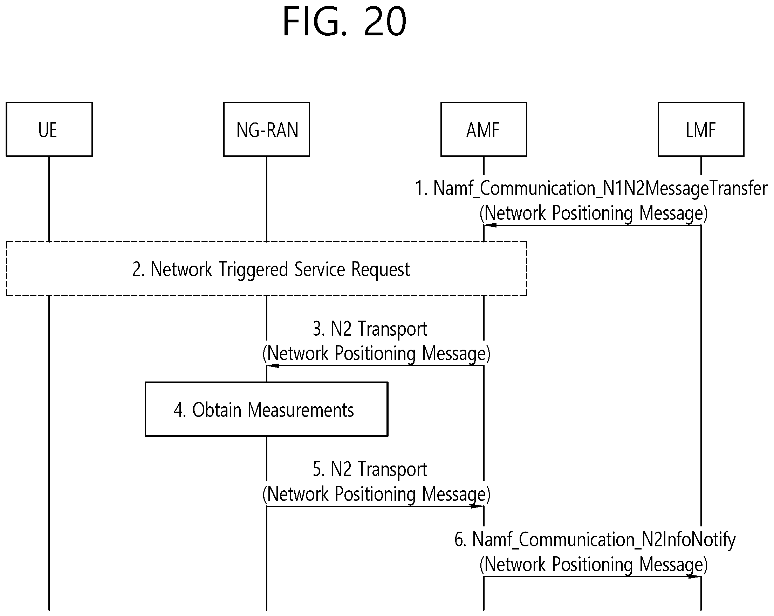

The positioning procedure may include, for example, a UE assisted and UE based positioning procedure (e.g., see FIG. 19) and a network assisted positioning procedure (e.g., see FIG. 20).

The UE assisted and UE based positioning procedure may include, for example, operations by the UE to measure positioning related metrics and report them to the LMF. Examples of specific methods for performing the positioning associated with the UE assisted and UE based positioning procedure include DL-TDOA and DL-AoD. Multi-cell RTT may also be used. In the case of multi-cell RTT, the UE may measure the UE Rx-Tx time difference and the NG-RAN may measure the gNB Rx-Tx time difference. The LMF or UE can use the two metrics (e.g., UE Rx-Tx time difference and gNB Rx-Tx time difference) to calculate the round trip time (RTT) between the UE and the gNB and calculate the distance based on the RTT to estimate the positioning of the UE.

The network assisted positioning procedure may include, for example, a positioning method that predicts a positioning based on a metric measured by the network. For example, UL-TDOA, and UL-AoA may be included.

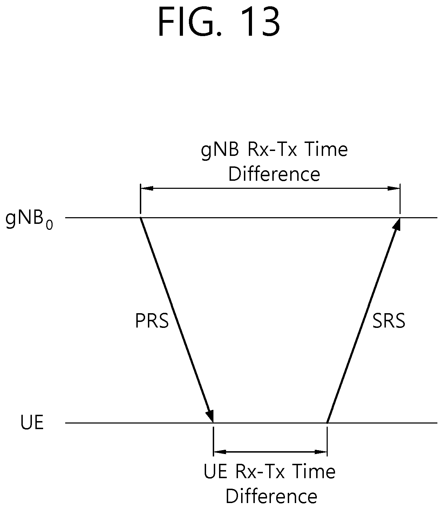

Hereinafter, with reference to FIGS. 13 through 15, an example of a multi-cell RTT will be described in detail as follows.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

**FIG. 13 illustrates an example of measuring a time difference according to one embodiment of the present disclosure.**

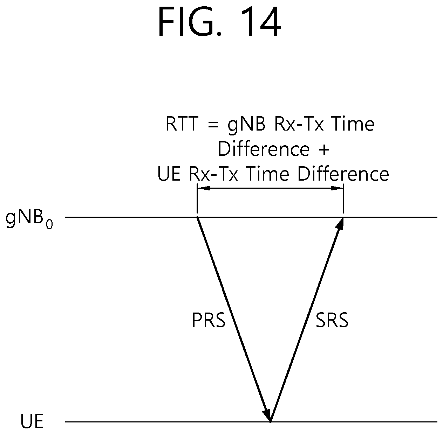

**FIG. 14 illustrates an example of calculating an RTT, according to one embodiment of the present disclosure.**

The LMF may trigger the multi-cell RTT positioning procedure to the UE and the NG-RAN (gNB or ng-eNB) via the Access and Mobility Management Function (AMF). Multiple NG-RANs may transmit PRS to the UE in a promised (or scheduled) slot. The UE may also transmit SRS in a committed (or scheduled) slot.

The process of calculating the distance between the gNB0 and the UE may be performed by measuring the time difference according to the example of FIG. 13 and then calculating the RTT according to the example of FIG. 14.

Referring to the example in Figure 13, $gNB_0$ sends a PRS to the UE. The UE transmits an SRS to the $gNB_0$. The UE calculates the UE Rx-Tx Time difference metric, which is the reception time of the PRS received from $gNB_0$ minus the transmission time of the SRS sent. The $gNB_0$ calculates the gNB Rx-Tx Time difference metric, which is the reception time of the SRS received from the UE minus the transmission time of the PRS sent.

The LMF or UE can then calculate the RTT between $gNB_0$ and the UE, as shown in the example in FIG. 14. RTT= gNB Rx-Tx Time difference + UE Rx-Tx Time difference. Here, gNB Rx-Tx Time difference may mean the time when the gNB transmitted the PRS minus the time when the gNB received the SRS. UE Rx-Tx Time difference may mean the time when the UE transmitted the SRS minus the time when the UE received the PRS.

The distance between the $gNB_0$ and the UE can be calculated based on the RTT between the gNB0 and the UE, as shown below.

$$Distance = \frac{RTT \times c}{2}, c \approx 3 \times 10^8 m/s$$

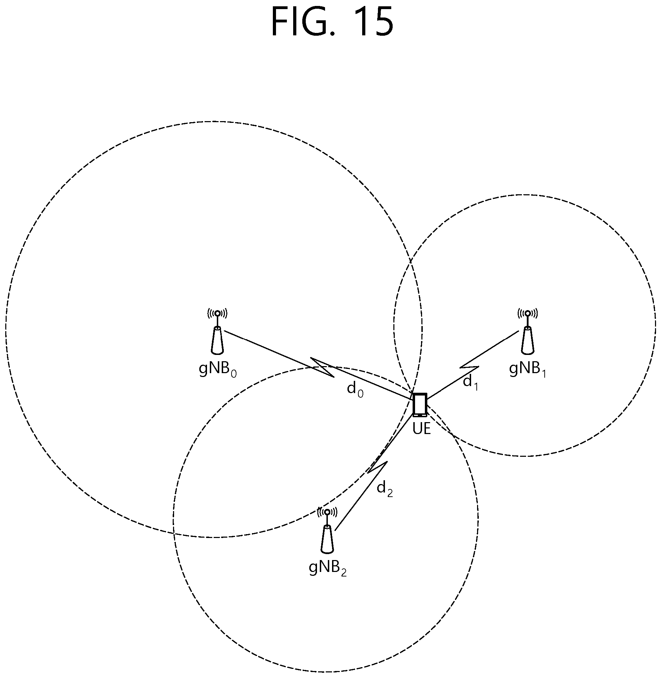

Once the distance to the UE has been calculated for all gNBs participating in the multi-cell RTT, the UE's position can be estimated, as shown in the example in Figure 15.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

FIG. 15 illustrates an example of multi-cell RTT positioning according to one embodiment of the present disclosure.

Referring to the example of FIG. 15, the RTT between gNB0, gNB1, gNB2 and the UE can be determined according to the examples of FIGS. 13 and 14, and the positioning of the UE can be estimated.

For example, let the RTT between $gNB_0$ and the UE be $RTT_0$, the RTT between $gNB_1$ and the UE be $RTT_1$, and the RTT between $gNB_2$ and the UE be $RTT_2$. Then, the distance $d_0$ between $gNB_0$ and the UE, the distance $d_1$ between $gNB_1$ and the UE, and the distance $d_2$ between $gNB_2$ and the UE can be calculated as follows

$$d_0 = \frac{RTT_0 \times c}{2}$$

$$d_1 = \frac{RTT_1 \times c}{2}$$

$$d_2 = \frac{RTT_2 \times c}{2}$$

Then, as shown in the example in Fig. 15, the intersection of the circles centered on the location of each gNB (circles with radius d0, d1, and d2, respectively) is the location of the UE.

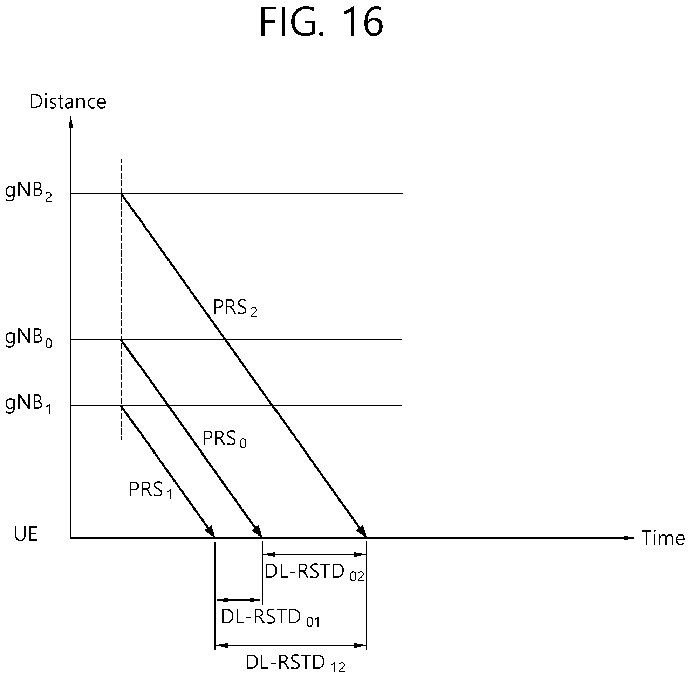

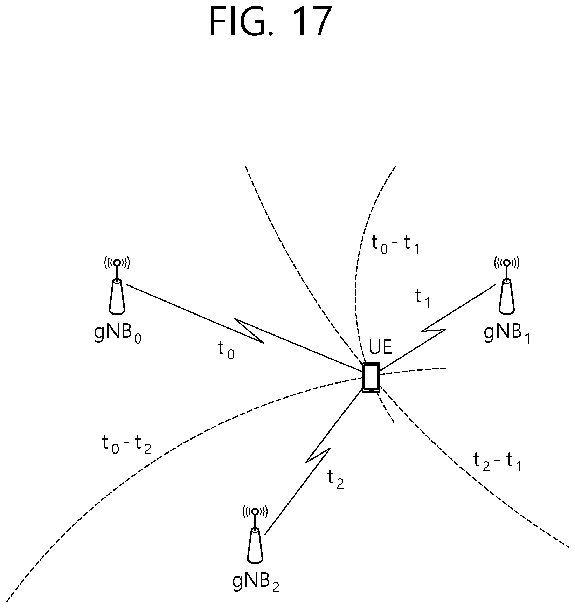

In the following, with reference to FIGS. 16 and 17, an example DL-TDOA is described in detail as follows.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

**FIG. 16 illustrates an example of measuring DL-RSTD according to one embodiment of the present disclosure.**

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

**FIG. 17 illustrates an example of performing DL-TDOA positioning, according to one embodiment of the present disclosure.**

Describe an example of DL-TDOA. In DL-TDOA, unlike Multi-cell RTT, we can measure the DL-RSTD, which is the time difference of the received PRS between two cells. Then, based on the DL-RSTD, a curve can be plotted centered on the positions of the two cells. By utilizing at least three cells, the UE or LMF can estimate the UE's position based on the DL-RSTD.

For example, referring to the example in FIG. 16, $gNB_0$ may transmit $PRS_0$ to the UE. $gNB_1$ may transmit $PRS_1$ to the UE. $gNB_2$ may transmit $PRS_2$ to the UE. The UE may calculate $DL\text{-}RSTD_{01}$, which is the difference between the reception timing of $PRS_0$ and $PRS_1$, the UE may calculate $DL\text{-}RSTD_{12}$, which is the difference between the reception timing of $PRS_1$ and $PRS_2$, and the UE may calculate $DL\text{-}RSTD_{02}$, which is the difference between the reception timing of $PRS_0$ and $PRS_2$.

Referring to FIG. 17, a curve corresponding to $DL\text{-}RSTD_{01}$ (corresponding to $t_0$-$t_1$ in FIG. 17) centered on the two cells $gNB_0$ and $gNB_1$ can be plotted. A curve corresponding to $DL\text{-}RSTD_{12}$ (corresponding to $t_2$-$t_1$ in FIG. 17) centered on the two cells $gNB_1$ and $gNB_2$ can be drawn. A curve corresponding to $DL\text{-}RSTD_{02}$ (corresponding to $t_0$-$t_2$ in FIG. 17) centered on the two cells $gNB_0$ and $gNB_2$ can be drawn. The point of intersection of the three curves can be estimated as the location of the UE.

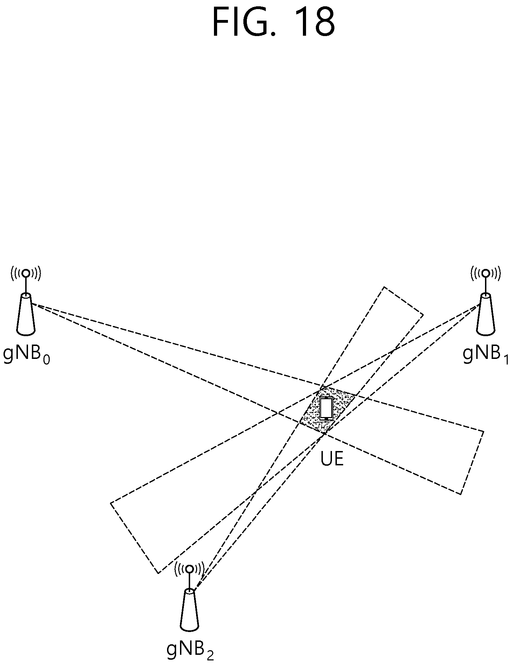

Referring to FIG. 18, an example of a DL-AoD and/or UL-AoA is further described.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

**FIG. 18 illustrates an example of positioning based on DL-AoD and/or UL-AoA, according to one**

**embodiment of the present disclosure.**

Unlike distance-based positioning such as DL-TDOA or multi-cell RTT, DL-AoD and UL-AoA are angle-based positioning methods. For example, it is a positioning method that measures the position of the UE by measuring the transmitting or receiving direction from the base station. For example, the UE may measure DL-AoD and the gNB may measure UL-AoA.

In the following, an example of a UE assisted and UE based positioning procedure will be described with reference to the example of FIG. 19.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

FIG. 19 is an example of a UE-assisted and UE-based positioning procedure, according to one embodiment of the present disclosure.

1. the LMF may send a message to the AMF requesting to transmit DL positioning messages to the UE. For example, the LMF may request the AMF to send a downlink (DL) positioning message to the UE by invoking the Namf_Communication_N1N2MessageTransfer service operation. This service operation contains the DL positioning message. The Session ID parameter of the Namf_Communication_N1N2MessageTransfer service operation is set to the LoCation Services (LCS) Correlation identifier. The downlink positioning message may request location information from the UE, provide support data to the UE, or provide a query to the UE capability if the UE positioning capability is not received from the AMF.

2. if the UE is in CM IDLE state, the AMF may initiate a network triggered service request procedure (e.g., see FIG. 6a to FIG. 6c) to establish a signaling connection with the UE.

3. the AMF forwards the downlink positioning message in a DL NAS TRANSPORT message to the UE. The AMF includes a routing identifier in the DL NAS TRANSPORT message, which is set to the LCS Correlation identifier. The downlink positioning message may request a response from the network (e.g., it may request the UE to acknowledge the downlink positioning message, return location information, or return capabilities).

4. the UE may store all supporting data provided in the downlink positioning message, and the UE may perform the position measurements and/or position calculations requested by the downlink positioning message.

5. during step 4, the UE may need to enter the CM-IDLE state to respond to the request received in step 3. In this case, the UE may initiate a UE-triggered service request (e.g., see FIG. 7) to establish a signaling connection with the AMF.

6. [Conditional operation] The UE sends the uplink positioning message contained in the NAS TRANSPORT message to the AMF. For example, to acknowledge the downlink positioning message, to reply with the location information obtained in step 4, or to reply with any capability as requested in step 3, the UE may send the uplink positioning message contained in the NAS TRANSPORT message to the AMF. When the UE sends the uplink positioning message in a NAS TRANSPORT message, the UE shall also include the routing identifier received in step 3 in the UL NAS TRANSPORT message.

7. [Conditional behavior] The AMF may invoke the Namf_Communication_N1MessageNotify service operation towards the LMF indicated by the routing identifier received in step 6. This service operation includes the uplink positioning message received in step 6 and the LCS correlation identifier. Step 6 and step 6 may be repeated if the UE needs to send multiple uplink positioning messages to respond to the request received in step 3. Steps 1 through 7 may be repeated to transmit new support data and to request additional location information and additional UE capabilities.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

**FIG. 20 is an example of a network-assisted positioning procedure according to one embodiment of the present disclosure.**

1. to request the serving NG-RAN node (gNB or ng-eNB) to transmit a network positioning message to the UE, the LMF may invoke the Namf_Communication_N1N2MessageTransfer service operation towards the AMF. The service operation may include a network positioning message and indicate whether positioning has been initiated for the PRU and LCS correlation identifiers. The network positioning message may request location information related to the UE from the NG-RAN and may include a UE unaware indication if the LMF receives the network positioning message from the AMF.

2. if the UE is in CM IDLE state, the AMF may initiate a network triggered service request procedure to establish a signaling connection with the UE. If positioning towards a Positioning Reference Unit (PRU) was indicated in step 1, the AMF shall verify that the UE is a valid PRU before initiating the procedure.

3. the AMF forwards the network positioning message within the N2 transport message to the serving NG-RAN node. The AMF includes a routing identifier (e.g., the global address of the LMF) in the N2 transport message that identifies the LMF.

4. The serving NG-RAN node can obtain the location information of the UE requested in step 3.

If a UE not recognized indication is received in a network positioning message, and the UE is in RRC_INACTIVE state, the NG-RAN rejects the network positioning message with an appropriate rejection reason (e.g., UE cannot be paged).

5. The serving NG-RAN node replies to the AMF with the network positioning message inlcuded in the N2 transport message with all the location information obtained in step 4. The serving NG-RAN node shall also include the routing identifier in the N2 transport message received in step 3.

6. The AMF invokes the Namf_Communication_N2InfoNotify service towards the LMF indicated by the routing identifier received in step 5. This service operation includes the network positioning message and the LCS correlation identifier received in step 5. To request additional location information and additional NG-RAN capabilities, steps 1 through 6 may be repeated.

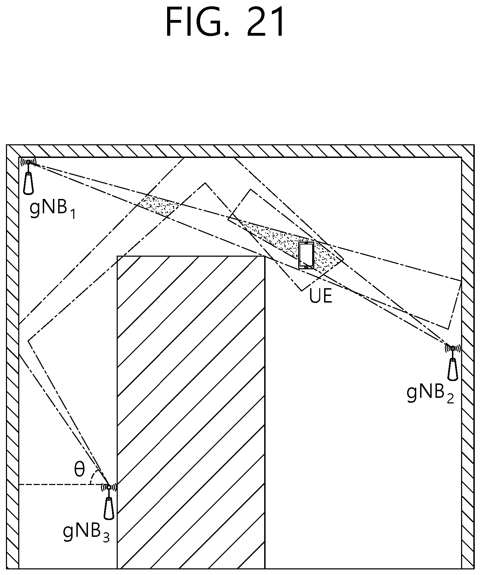

Referring to FIG. 21, an example of positioning error due to non-LOS is illustrated.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

**FIG. 21 illustrates an example of positioning error in an indoor environment.**

Figure 21 shows an example of positioning error due to Non-LOS in an indoor environment.

According to prior art positioning methods, the UE position can be accurately predicted in LOS environments. However, in environments such as indoor, where many non-LOS (NLOS) situations occur, it is difficult to accurately predict the UE position. For example, in an indoor environment such as the example shown in FIG. 21, gNB1 and gNB2 are located in a LOS environment from the UE's position. Therefore, when gNB1 and gNB2 calculate the UE position, they can accurately calculate the UE position without any error. However, gNB3 cannot predict the exact position of the UE because the gNB3 thinks that the UE is in direction $\theta$, and an error occurs because there is no LOS-based communication between gNB3 and the UE.

Based on the results of the measurements, a flag may be sent to indicate whether the environment is NLOS or not. For example, the UE and/or gNB may determine NLOS based on the results of the measurements it has performed, and may send a flag to the LMF indicating whether it is in an NLOS environment or not. The Location Management Function (LMF), which is the entity responsible for calculating the positioning, can check the flag. If it is NLOS, the LMF compensates for the accuracy in NLOS environments by either not using the positioning metric measured in NLOS environments or by judging the metric to be less reliable, which is highly inaccurate. Therefore, there is a need for an effective and accurate solution to address the positioning accuracy problem in NLOS environments. In particular, compared to outdoor environments, indoor environments are more likely to be NLOS environments. In order to improve positioning accuracy indoors, a fundamental solution to improve positioning accuracy in NLOS environments is essential.

Various examples of the present disclosure propose various examples to address these issues. To address these issues, information related to the indoor structure may be required. Further, within that indoor structure, it may be proposed to utilize the indoor structure information based on the results of orientation (e.g., UL AOA/DL AOD) measurements or distance measurements between the UE and the eNB/gNB. For example, based on the measurement results (e.g., direction measurement results and/or distance measurement results) and information related to the indoor structure, the exact location of the UE may be predicted (or calculated or determined).

In accordance with various examples of the present disclosure, a database including information related to an indoor structure may be generated. For example, to generate the information related to the indoor structure, mmWave sensing technology may be utilized. The mmWave sensing capability may be added to the gNB. As an example of how mmWave sensing may be used, see "3DRIED: A High-Resolution 3-D Millimeter-Wave Radar Dataset Dedicated to Imaging and Evaluation" (https://www.mdpi.com/2072-4292/13/17/3366).

By using mmWave sensing technology, the gNB can perform imaging tasks on the surrounding environment. The gNB may then generate a 3D map of the indoor environment based on the imaging tasks. Alternatively, the gNB may use mmWave sensing technology to generate information related to the structure of the indoor environment and transmit the generated information to the LMF. The LMF may then receive information related to the structure of the indoor from one or more gNBs located in the same indoor environment. Based on the received information related to the structure of the indoor, the LMF may generate a 3D map of the indoor. Alternatively, the gNBs and/or LMFs may obtain the 3D map of the indoor via another method (e.g., preconfigured by the operator) in advance.

A 3D map of the indoor may be obtained. Then, based on that 3D map, the location of the UE in the indoor may be accurately determined (or calculated or obtained) from the distance measurement result between the UE and the eNB/gNB and/or the UL AoA/DL AOD measurement result. For example, the UE and/or the gNB may transmit the distance measurement result between the UE and the eNB/gNB and/or the UL AoA/DL AOD measurement result to the LMF. The LMF may then determine the location of the UE based on the 3D map, the distance measurement results between the UE and the eNB/gNB, and/or the UL AoA/DL AOD measurement results.

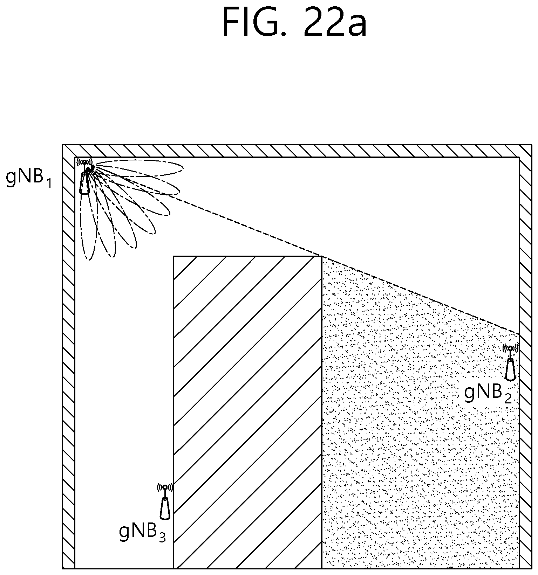

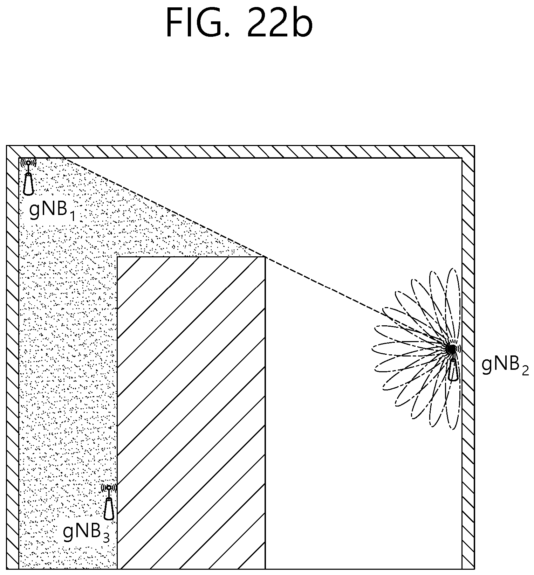

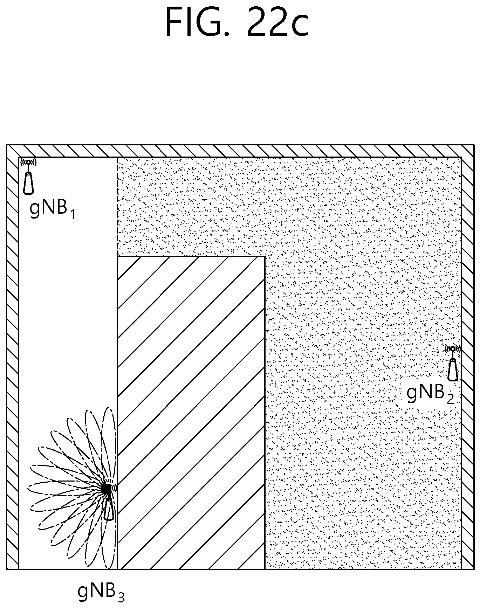

Referring now to FIGS. 22a through 22c, the operation of generating a 3D map based on mmWave sensing is described in detail.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

FIGS. 22a to 22c illustrate an example of performing mmWave sensing, according to one embodiment of the present disclosure.

When a gNB performs mmWave sensing, it can measure the distance, velocity, and angle of incidence of a reflector. Utilizing these features, gNBs can scan their surroundings. With conventional technology, it can be difficult to scan structures such as walls in crowded indoor environments. However, since mmWave sensing can detect minute movements, gNBs can distinguish between stationary and moving objects. Thus, gNBs can distinguish between people and walls in an indoor environment based on the reflected signal. The LMF can collect the information scanned by each eNB/gNB. Then, the LMF can generate a 3D map of the interior of the room. At this time, the LMF can generate a complete indoor 3D map of the indoor environment by ignoring the signals reflected by people and utilizing only the reflected signals from fixed objects. Alternatively, as described above, the entire indoor 3D map of the indoor environment may be pre-stored in the gNB and/or LMF.

In a situation in which the 3D Map being completed, the situation in FIG. 21 is described based on various examples of the present disclosure. gNB1 and gNB2 are able to receive the UE signal with LOS. However, in the case of gNB3, there is no LOS path to the UE. However, even if gNB3 is in a non-LOS environment from the UE, it may be possible to measure the positioning of the UE through ray-tracing techniques in the presence of a 3D map. For example, based on the incidence angle information UL AOA or DL AOD from the UE to the gNB3, the gNB3 and/or LMF may perform positioning measurements of the UE by utilizing the 3D map. If the UE or LMF knows the UL AOA/DL AOD information and the indoor 3D map, it can easily estimate the UE's position in NLOS environment by applying the ray-tracing method backwards from the gNB. Here, ray-tracing refers to the backward tracing method for rays. Since the characteristics of the wireless communication signal between the actual UE and the gNB are similar to the characteristics of light, the ray-tracing method can be applied.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

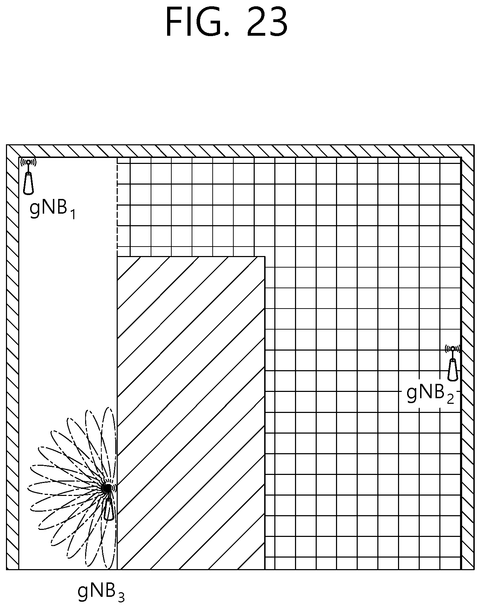

FIG. 23 illustrates an example of utilizing a 3D map, according to one embodiment of the present disclosure.

In some circumstances, the LMF and/or $gNB_3$ may not know the value of $\theta$. In this case, it may be assumed that only the distance information between the UE and the gNB3 is known. Here, the distance information can be obtained based on RTT. In order for the LMF to calculate the RTT value, the UE may measure the UE Rx-Tx Time difference, the gNB may measure the gNB Rx-Tx Time difference, and the UE and gNB may report the UE Rx-Tx Time difference and the gNB Rx-Tx Time difference to the LMF. Based on the UE Rx-Tx Time difference and the gNB Rx-Tx Time difference collected by the LMF from the UE and the gNB, the LMF may calculate the distance information. In such a situation, if a 3D map exists, the LMF may divide the shaded area into a 2D grid of a certain resolution in a checkerboard pattern in advance or a 3D grid if necessary. The LMF may also store the distance information of the shaded areas in advance. The LMF may utilize the distance information of the shaded areas for UE location prediction. For example, the LMF may divide the shaded area of gNB3 into 2D/3D grids with a certain resolution (e.g., NLOS area of gNB3) and store the distance information from gNB3 at each coordinate. Then, when the LMF obtains the distance information between the gNB3 and the UE, it can check the list of coordinates that map to that distance. The LMF knows that the list of coordinates is a candidate for the point where the UE is believed to be located. To more accurately predict the location of the UE, the LMF can further collect the distance information from gNB1 and gNB2 to predict the location of the UE.

It is also possible to use artificial intelligence / machine learning (AI/ML) methods to utilize UE location-specific data indoors as training data in advance. In this case, the AI/ML method can be applied to predict the UE location indoors. For example, a particular UE may be located in a shaded area from gNB3. The LMF can obtain the location information of the UE via gNB1, gNB2, and gNB4, and also obtain the distance between gNB3 and the UE. Then, based on the information obtained from gNB1, gNB2, and gNB4, the LMF may match and store the predicted UE location information and the distance between gNB3 and the UE. Once these data are accumulated, the LMF can predict the location of the UE based on the AI/ML method by simply inputting the distance information between gNB1, gNB2, gNB_x gNBs and the UE.

At the time of gNB installation, a 3D map may be created in advance. Then, a higher layer managing the location, such as a Location Management Function (LMF), may store and manage the 3D map information for the indoor structure. Alternatively, the LMF may generate the 3D map based on the results of the mmWave sensing performed by the one or more gNBs, based on the method described above. The LMF may then receive a message from the UE or another entity authorized to view the location information of the UE that requests the location information of the UE. For example, the UE's location information may be requested by another entity for the following reasons. The owner of the UE may request the location information to look up their own location information. A parent may request the location information of their child's UE to check on their child's location. Alternatively, the UE may be installed on a pet or valuables as an IoT type, and the user may request location information to check the location of the pet or valuables. Alternatively, the gNB may request the UE's location information in order to recommend a better gNB based on the UE's location when a handover procedure is performed.

If another entity requests location information of the UE, the LMF may determine whether it is indoor or not. And if indoor, the LMF may send the UE's location information along with a 3D map of the indoor environment to the UE or other entity authorized to view the location information.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

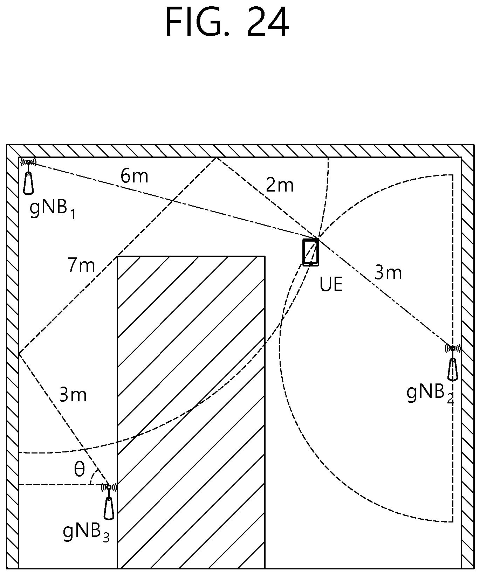

FIG. 24 illustrates an example of predicting a location of a UE in an indoor environment, according to one embodiment of the present disclosure.

More specifically, the example of FIG. 24 illustrates a method for estimating the location of a UE by measuring the distance between a gNB and a UE in an indoor environment. Since gNB1 and gNB2 are in a LOS environment with the UE, the distance between gNB1 and the UE is measured to be 6 meters, and the distance between gNB2 and the UE is measured to be 3 meters. If a circle with a radius of 6 meters is drawn around the location of gNB1 and a circle with a radius of 3 meters is drawn around the location of gNB2, the intersection of the two circles is two points in the example of FIG. 24. If gNB3 and the UE were in a LOS environment, the LMF or UE would be able to distinguish which of the two intersections is the actual UE location, but in the example in FFIG. 24, gNB3 and the UE are in an NLOS environment, and without information related to the indoor structure, the location of the UE cannot be accurately distinguished. The distance between gNB3 and UE is measured to be 12 meters. Based on the indoor 3D map, the LMF can determine the location of the UE indoors as the intersection of the candidate locations at a distance of 12 meters from gNB3 and the candidate locations of the UE obtained from gNB1 and gNB2. The LMF may provide the UE's location information together with the indoor 3D map to the UE requesting the location information.

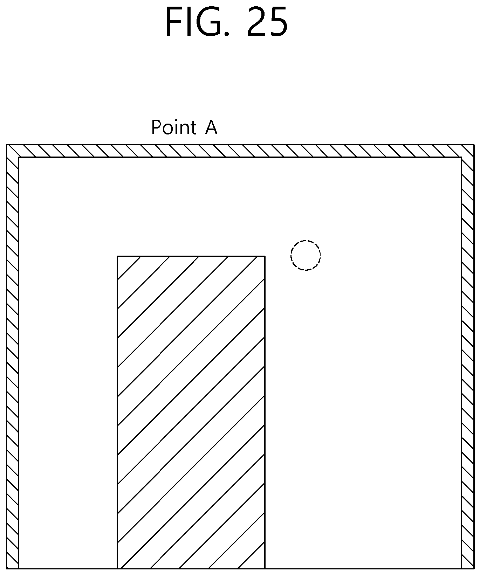

The location information of the UE may be provided for display in an indoor UE positioning application, for example, as shown in the example of FIG. 25.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

FIG. 25 illustrates an example of displaying the location of a UE on a display, according to one embodiment of the present disclosure.

The LMF can transmit indoor 3D maps and UE location information. The UE may then, based on the indoor 3D map and the UE's location information, display the UE's location on the UE's display, as shown in the example in FIG. 25.

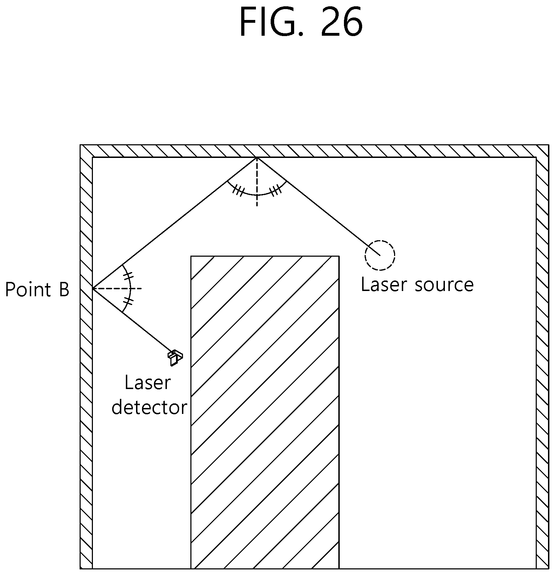

Earlier, in the introduction to this specification, we described ray-tracing. Hereinafter, ray-tracing will be described in more detail with reference to FIG. 26.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

FIG. 26 illustrates an example of ray-tracing, according to one embodiment of the present disclosure.

In the example in Figure 26, a laser is output from a laser source, travels through Point A, Point B, and reaches the laser detector. The laser detector can then find Point A because the incident angle and the reflection angle at Point B are the same. Similarly, the laser detector can predict the direction of the laser source because the incident angle and reflection angle are the same at Point A. The ray-tracing method can also be applied to UE positioning. When performing UE positioning, based on the ray-tracing method, the direction of the UE can be predicted and the distance between the UE and gNB3 can be measured. This allows not only the orientation but also the exact location of the UE in an NLOS environment can be predicted.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

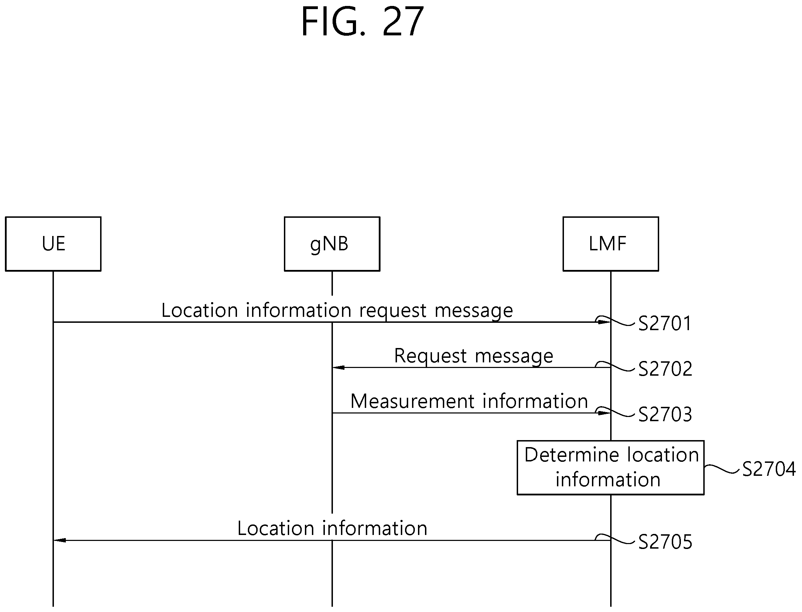

FIG. 27 illustrates an example of a procedure, according to one embodiment of the present disclosure.

For example, for the example of FIG. 27, the operations previously described in the examples of FIGS. 8 through 27 may also be applied. For example, any behavior, content, etc. described in the various examples of the present disclosure may be applied, even if the behavior, content, etc. is not directly described in the example of FIG. 27.

Note that the example in FIG. 27 shows a single gNB, but this is for illustrative purposes only. In the example of FIG. 27, one or more gNBs may perform the operations illustrated in the example of FIG. 27.

In step S2701, the UE may send a request message to the LMF requesting location information.

For example, the request message may be a Location Request (LR) request message. The UE may send the request message through the base station (e.g., NG-RAN, gNB, etc.) to the AMF. The AMF may perform a procedure to select an LMF. The AMF may forward the request message to the LMF. The LMF may perform a UE positioning procedure (e.g., steps S2702 to S2704) to determine the location information of the UE, and then, in step S2705, transmit a response message to the UE including the location information of the UE. The response message may be, for example, an LR response message.

In step S2702, the LMF may send a request message to one or more gNBs.

In step S2703, the gNB may transmit measurement information to the LMF. For example, the measurement information may include information related to measurements performed by the gNB and/or information related to measurements performed by the UE. For example, before step S2703 is performed, the UE may perform measurements on signals received from the one or more gNBs and report the measurement results to the gNBs.

The measurement information may include, for example, measurement information based on one or more of DL-TDOA, UL-TDOA, Multi-cell RTT, UL-AoA, DL-AoD, mmWave sensing, and Ray-tracing. The measurement performed by the gNB may be, for example, a measurement of the SRS transmitted by the UE. The measurement performed by the UE may be, for example, a measurement of a reference signal transmitted by the gNB.

The first gNB in the one or more gNBs may recognize that the UE and the gNB are in an NLOS environment based on measurements that it has performed. The first gNB may then transmit information to the LMF indicating that it is NLOS. For example, the information indicating NLOS may be in the form of a flag.

Before step S2704 is performed, the LMF may obtain information related to the indoor structure of the place where the UE is located. For example, the LMF may generate a 3D map of the indoor structure based on measurement information. Alternatively, information related to the indoor structure may be pre-stored in the LMF and/or the gNB. The operation of the LMF acquiring the information related to the indoor structure may be performed when the LMF receives information indicating that it is NLOS.

The information regarding the indoor structure may be, for example, the 3D map information described earlier. For example, a gNB in an NLOS environment may measure the UL-AoA from the UE to determine the direction of the UE. The gNB may then measure the distance between the gNB and the UE. The gNB may transmit the direction of the UE and the distance between the UE and the gNB to the gNB. Then, based on the 3D map information, the gNB or LMF may know that the UE is a given distance away from the gNB, but that an obstacle, such as a wall, is between the UE and the gNB. Based on the ray-tracing method, the gNB or LMF can then calculate the direction in which the signal between the UE and the gNB is reflected from the obstacle, and thus more accurately predict the UE's location in the indoor environment.

At step S2704, the LMF may determine the location information of the UE. For example, the LMF may determine the location information of the UE based on information related to the room structure and measurement information. For example, the LMF may estimate a location of the UE in the indoor structure of the place where the UE is located.

In step S2705, the LMF may transmit location information to the UE. Here, the location information may refer to the location information of the UE. In addition to the location information, the LMF may also transmit information related to the indoor structure of the place where the UE is located. For example, the information related to the indoor structure may be 3D map information. Based on the location information of the UE and the information related to the indoor structure, the UE may display the location of the UE on the display of the UE, as shown in the example of FIG. 25.

According to various examples of the present disclosure, indoor positioning methods and procedures based on information related to the internal structure of an indoor environment may be performed. For example, based on information related to an incidence angle θ of the gNB and an indoor 3D map, a method and procedure for predicting a UE position by ray-tracing may be performed. For example, the method and procedure may include predicting the location of the UE utilizing an AI/ML method based on distance data and/or angle data pre-trained for the indoor environment. For example, if the LMF receives a message requesting location information in an indoor environment, the method and procedure may include providing location information of the indoor structure and the UE.

The present disclosure can have a variety of effects.

For example, confidence in positioning results in indoor NLOS environments is improved. The position of the UE in an indoor NLOS environment can be predicted more accurately.

The effects that may be obtained from the specific examples of this disclosure are not limited to those listed above. For example, there may be a variety of technical effects that a person having ordinary skill in the related art may understand or infer from this disclosure. Accordingly, the specific effects of the present disclosure are not limited to those expressly set forth herein, but may include a variety of effects that may be understood or inferred from the technical features of the present disclosure.

For reference, the operation of the terminal (e.g., UE) described in the present specification may be implemented by the apparatus of FIGS. 1 to 4 described above. For example, the terminal(e.g., UE) may be the first device 100 or the second device 200 of FIG. 2. For example, an operation of a terminal(e.g., UE) of the present disclosure may be processed by one or more processors 102 or 202 . The operation of the terminal of the present disclosure may be stored in one or more memories 104 or 204 in the form of an instruction/program (e.g., instruction, executable code) executable by one or more processors 102 or 202 . One or more processors 102 or 202 control one or more memories 104 or 204 and one or more transceivers 105 or 206, and may perform the operation of the terminal of the present disclosure by executing instructions/programs stored in one or more memories 104 or 204.

In addition, instructions for performing an operation of a terminal described in the present disclosure of the present specification may be stored in a non-volatile computer-readable storage medium in which it is recorded. The storage medium may be included in one or more memories 104 or 204 . And, the instructions recorded in the storage medium may be executed by one or more processors 102 or 202 to perform the operation of the terminal (e.g., UE) described in the present disclosure of the present specification.

For reference, the operation of a network node or base station (e.g., AMF, SMF, UPF, PCF, AUSF, etc.) of the present disclosure may be implemented by the apparatus of FIGS. 1 to 3 to be described below. For example, a network node or a base station may be the first device 100 of FIG.2 or the second device 200 of FIG.2. For example, the operation of a network node or base station of the present disclosure may be processed by one or more processors 102 or 202. The operation of the terminal of the present disclosure may be stored in one or more memories 104 or 204 in the form of an instruction/program (e.g., instruction, executable code) executable by one or more processors 102 or 202. One or more processors 102 or 202 may perform the operation of a network node or a base station of the present disclosure, by controlling one or more memories 104 or 204 and one or more transceivers 106 or 206 and executing instructions/programs stored in one or more memories 104 or 204.

In addition, instructions for performing the operation of the network node or base station described in the present disclosure of the present specification may be stored in a non-volatile (or non-transitory) computer-readable storage medium. The storage medium may be included in one or more memories 104 or 204. And, the instructions recorded in the storage medium are executed by one or more processors 102 or 202, so that the operations of a network node or base station are performed.

In the above, preferred embodiments have been exemplarily described, but the present disclosure of the present specification is not limited to such specific embodiments, and thus, modifications, changes, or may be improved.

In the exemplary system described above, the methods are described on the basis of a flowchart as a series of steps or blocks, but are not limited to the order of the steps described, some steps may occur in a different order or concurrent with other steps as described above. In addition, those skilled in the art will understand that the steps shown in the flowchart are not exclusive and that other steps may be included or that one or more steps of the flowchart may be deleted without affecting the scope of rights.

The claims of the present disclosure may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method.


**Claims**

1. A method for performing communication, the method performed by a Location Management Function (LMF) and comprising:

   receiving a message requesting location information of a user equipment (UE), from the UE;
   transmitting a request message requesting measruement related to the location of the UE, to one or more base stations;
   receiving measurement information related to the UE from the one or more base stations,
   wherein the measurement information includes information related to a measurement based on a sounding reference signal (SRS) of the UE and/or information related to a measurement based on a reference signal of the one or more base stations;
obtaining information related to an indoor structure of a place where the UE is located, based on the measurement information;
determining a location information of the UE, based on the information related to the indoor structure and the measurement information; and
transmitting the location information of the UE to the UE.

2. The method of claim 1, further comprising:
receiving information related to that the measurement information related to the UE was measured in a Non Line of Sight (NLOS) environment, from a first base station included in the at least one base station.

3. The method of claim 2,
wherein the information related to that the measurement information related to the UE was measured in the NLOS environment is in the form of a flag indicating NLOS.

4. The method of claim 2,
wherein based on the information related to that the measurement information related to the UE was measured in the NLOS environment being received, the information related to the indoor structure is obtained.

5. The method of claim 1,
wherein the measurement based on the reference signal from the base station is a measurement based on mmWave sensing.

6. The method of claim 1, wherein the obtaining the information related to the indoor structure of the place where the UE is located includes:
generating a 3D map of the indoor structure, based on the measurement information.

7. The method of claim 1,
wherein the transmitting the location information includes:
transmitting the location information of the UE and the information related to the indoor structure, to the UE.

8. A location management function (LMF) adapted to operate in a wireless communication system, wherein the LMF comprising:

one or more transceivers;
one or more processors; and
one or more memories that store instructions, and the one or more memories are operably coupled to the one or more processors,
based on the instructions being executed by the at least one processor, perform operations comprising:

receiving a message requesting location information of a user equipment (UE), from the UE;
transmitting a request message requesting measruement related to the location of the UE, to one or more base stations;
receiving measurement information related to the UE from the one or more base stations,
wherein the measurement information includes information related to a measurement based on a sounding reference signal (SRS) of the UE and/or information related to a measurement based on a reference signal of the one or more base stations;
obtaining information related to an indoor structure of a place where the UE is located, based on the measurement information;
determining a location information of the UE, based on the information related to the indoor structure and the measurement information; and
transmitting the location information of the UE to the UE.

9. A method for performing communication, the method performed by a User Equipment (UE) and comprising:

transmitting a message requesting location information of the UE, to a Location Management Function (LMF);
performing a measurement for one or more base stations;
transmitting a measurement report to the one or more base stations, based on the measurement; and

receiving location information of the UE from the LMF.

10. The method of claim 9,
wherein the receiving includes receiving information related to the location of the UE and information related to the indoor structure of a place where the UE is located.

11. The method of claim 9, further comprising:
displaying the location information of the UE on a display of the UE.

12. A User Equipment (UE) adapted to operate in a wireless communication system, wherein the UE comprising:

one or more transceivers;
one or more processors; and
one or more memories that store instructions, and the one or more memories are operably coupled to the one or more processors,
based on the instructions being executed by the at least one processor, perform operations comprising:

transmitting a message requesting location information of the UE, to a Location Management Function (LMF);
performing a measurement for one or more base stations;
transmitting a measurement report to the one or more base stations, based on the measurement; and
receiving location information of the UE from the LMF.

13. An apparatus in a wireless communication system, wherein the apparatus comprising:

one or more processors; and
one or more memories that store instructions, and the one or more memories are operably coupled to the one or more processors,
based on the instructions being executed by the at least one processor, perform operations comprising:

transmitting a message requesting location information of the apparatus, to a Location Management Function (LMF);
performing a measurement for one or more base stations;
transmitting a measurement report to the one or more base stations, based on the measurement; and
receiving location information of the apparatus from the LMF.

14. A non-transitory Computer Readable Medium (CRM) storing instructions that, based on being executed by one or more processors, perform operations comprising:

transmitting a message requesting location information of a device including the one or more processors, to a Location Management Function (LMF);
performing a measurement for one or more base stations;
transmitting a measurement report to the one or more base stations, based on the measurement; and
receiving location information of the device from the LMF.

# FIG. 1

1

100e
Home Appliance

100f
IoT device

100d
Hand-held device

150a

300

200

Network (5G)

200

200a

200

150c

200

400
AI Server/device

150a

100a
Robot

150a

150a

100c
XR device

150a

150a
100b-1
Vehicle

150b

Vehicle
100b-2

EP 4 561 203 A1

# FIG. 2

EP 4 561 203 A1

# FIG. 3

## FIG. 4

Five Senses — Touch, Smell, Taste, Sight, Hear

BCI and AI

SDN

FSO communication

Underwater communication

sCell-UE, sCell-APs, Dense sCell-RAN, sCell-UE, sCell-APs

New virtual world

3D virtual coordination

virtual remote assistance

3D Story virtualization

3D gaming

M2M & M2H comunication

Drone network

Ground/satellite integration

M-UE

AR, MR, M-UE

UAV BS

UAV Controller network

UE

UM-MIMO BS

VLC, VR — Smart Home

eHealth remote monitoring

Robotics & automation

UM MIMO BS

FSO backhaul

Smart City

VLC — Autonomous vehicle

# FIG. 5

# FIG. 6a

Sequence diagram with participants: UE, (R)AN, AMF, UPF (new I-UPF), SMF, UPF (old I-UPF), UPF (PSA), PCF, AUSF

1. Service Request (UE → (R)AN)
2. N2 message (Service Request) ((R)AN → AMF)
3. Authentication / Security ((R)AN ↔ AUSF)
4. Nsmf_PDUSession_UpdateSMContext Request (AMF → SMF)
5. UPF selection (SMF)
6a. N4 session Establishment Request (SMF → UPF (new I-UPF))
6b. N4 session Establishment Response (UPF (new I-UPF) → SMF)
7a. N4 Session Modification Request (SMF → UPF (PSA))
7b. N4 Session Modification Response (UPF (PSA) → SMF)
Downlink data (UPF (PSA) → UPF (new I-UPF))
8a. N4 session Modification Request (SMF → UPF (old I-UPF))
8b. N4 session Modification Response (UPF (old I-UPF) → SMF)
I-UPF is relocated
9. Buffered DL data forwarding (UPF (old I-UPF) → UPF (new I-UPF))
I-UPF is removed
10. Buffered DL data forwarding (UPF (old I-UPF) → UPF (PSA))

EP 4 561 203 A1

# FIG. 6b

**UE** — **(R)AN** — **AMF** — **UPF (new I-UPF)** — **SMF** — **UPF (old I-UPF)** — **UPF (PSA)** — **PCF** — **AUSF**

11. Nsmf_PDUSession_UpdateSMContext Response

12. N2 Request

13. RRC signalling

Uplink data (case : new I-UDF is inserted or I-UPF is relocated)

Uplink data (case : I-UPF is removed)

14. N2 Request Ack

15. Nsmf_PDUSession_UpdateSMContext Request

16. SMF initiated SM policy Association Modification

I-UPF

17a. N4 session Modification Request

17b. N4 session Modification Response

Downlink data

EP 4 561 203 A1

# FIG. 6c

UE | (R)AN | AMF | UPF (new I-UPF) | SMF | UPF (old I-UPF) | UPF (PSA) | PCF | AUSF

No I-UPF

18a. N4 session Modification Request

18b. N4 session Modification Response

Downlink data

19. Nsmf_PDUSession_UpdateSMContext Response

20a. N4 session Modification Request

20b. N4 session Modification Response

21a. N4 session Modification Request

21b. N4 session Modification Response

22a. N4 session Modification
Request or N4 Session Release Request

22a. N4 session Modification
Response or N4 Session Release Response

EP 4 561 203 A1

# FIG. 7

# FIG. 8

# FIG. 9

# FIG. 10

# FIG. 11

# FIG. 12

(a)

(b)

# FIG. 13

gNB Rx-Tx Time
Difference

gNB$_0$

PRS                    SRS

UE

UE Rx-Tx Time
Difference

# FIG. 14

RTT = gNB Rx-Tx Time
Difference +
UE Rx-Tx Time Difference

$gNB_0$

PRS          SRS

UE

# FIG. 15

EP 4 561 203 A1

FIG. 16

# FIG. 17

# FIG. 18

FIG. 19

# FIG. 20

```
    UE          NG-RAN          AMF           LMF
    │             │              │             │
    │             │              │  1. Namf_Communication_N1N2MessageTransfer
    │             │              │      (Network Positioning Message)
    │             │              │◄────────────│
┌───────────────────────────────────────────┐
│         2. Network Triggered Service Request │
└───────────────────────────────────────────┘
    │             │              │             │
    │             │   3. N2 Transport          │
    │             │  (Network Positioning Message)
    │             │◄─────────────│             │
    │        ┌──────────────────────┐          │
    │        │  4. Obtain Measurements │        │
    │        └──────────────────────┘          │
    │             │              │             │
    │             │   5. N2 Transport          │
    │             │  (Network Positioning Message)
    │             │─────────────►│             │
    │             │              │             │
    │             │              │  6. Namf_Communication_N2InfoNotify
    │             │              │     (Network Positioning Message)
    │             │              │────────────►│
    │             │              │             │
```

EP 4 561 203 A1

# FIG. 21

# FIG. 22a

# FIG. 22b

# FIG. 22c

# FIG. 23

# FIG. 24

# FIG. 25

Point A

# FIG. 26

Point B

Laser detector

Laser source

# FIG. 27

| | | |
|---|---|---|
| UE | gNB | LMF |

Location information request message — S2701

Request message — S2702

Measurement information — S2703

Determine location information — S2704

Location information — S2705

## INTERNATIONAL SEARCH REPORT

| International application No. |
| --- |
| **PCT/KR2023/010234** |

| A. | CLASSIFICATION OF SUBJECT MATTER |
| --- | --- |

**H04W 64/00**(2009.01)i; **H04W 4/029**(2018.01)i; **H04W 24/08**(2009.01)i; **H04L 5/00**(2006.01)i; **G06T 17/05**(2011.01)i

According to International Patent Classification (IPC) or to both national classification and IPC

| B. | FIELDS SEARCHED |
| --- | --- |

Minimum documentation searched (classification system followed by classification symbols)

H04W 64/00(2009.01); G01S 5/00(2006.01); G01S 5/02(2010.01); H04B 17/309(2015.01); H04W 4/02(2009.01); H04W 76/19(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 위치(location), Sounding Reference Signal(SRS), 실내(indoor), Non Line of Sight(NLOS), 맵(map), Location Management Function(LMF), flag

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | ERICSSON. Potential enhancements of information reporting from UE and gNB for multipath/NLOS mitigation. R1-2110464, 3GPP TSG-RAN WG1 Meeting #106-bis-e, e-Meeting. 13 October 2021.<br>See sections 2.2 and 2.4. | 1-8,10 |
| X | US 2022-0120842 A1 (QUALCOMM INCORPORATED) 21 April 2022 (2022-04-21)<br>See paragraphs [0116]-[0118], [0129], [0132], [0135]-[0138] and [0192]; and figure 4A. | 9,11-14 |
| Y | | 1-8,10 |
| Y | INTERDIGITAL, INC. Evaluation on AI/ML for positioning accuracy enhancement. R1-2204159, 3GPP TSG RAN WG1 #109-e, e-Meeting. 29 April 2022.<br>See section 2.2. | 2-4 |
| A | KR 10-2021-0088678 A (HUAWEI TECHNOLOGIES CO., LTD.) 14 July 2021 (2021-07-14)<br>See paragraphs [0064]-[0083]. | 1-14 |
| A | WO 2022-080818 A1 (LG ELECTRONICS INC.) 21 April 2022 (2022-04-21)<br>See claims 1-6. | 1-14 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **19 October 2023** | **19 October 2023** |

| Name and mailing address of the ISA/KR | Authorized officer |
| --- | --- |
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| International application No. |
|---|
| **PCT/KR2023/010234** |

| Patent document cited in search report | | | Publication date (day/month/year) | Patent family member(s) | | | Publication date (day/month/year) |
|---|---|---|---|---|---|---|---|
| US | 2022-0120842 | A1 | 21 April 2022 | CN | 116548029 | A | 04 August 2023 |
| | | | | EP | 4229934 | A2 | 23 August 2023 |
| | | | | KR | 10-2023-0087473 | A | 16 June 2023 |
| | | | | WO | 2022-098480 | A2 | 12 May 2022 |
| | | | | WO | 2022-098480 | A3 | 04 August 2022 |
| KR | 10-2021-0088678 | A | 14 July 2021 | CN | 111447543 | A | 24 July 2020 |
| | | | | CN | 111447543 | B | 26 October 2021 |
| | | | | EP | 3869834 | A1 | 25 August 2021 |
| | | | | US | 2021-0297817 | A1 | 23 September 2021 |
| | | | | WO | 2020-135266 | A1 | 02 July 2020 |
| WO | 2022-080818 | A1 | 21 April 2022 | KR | 10-2023-0087438 | A | 16 June 2023 |

Form PCT/ISA/210 (patent family annex) (July 2022)